# NEW EUROPEAN PATENT SPECIFICATION

(11) **EP 3 423 731 B2**
(45) Date of publication and mention of the opposition decision: **15.10.2025**
(45) Mention of the grant of the patent: 03.11.2021
(21) Application number: 17760531.8
(22) Date of filing: 27.02.2017
(51) Int. Cl.: F16D 55/00, F16D 55/02, F16D 55/22, F16D 55/224, F16D 55/225, F16D 65/00, F16D 55/2255, F16D 65/097

(54) **DISC BRAKE**
SCHEIBENBREMSE
FREIN À DISQUE

(30) Priority: 03.03.2016 US 201615059817
(43) Date of publication of application: 09.01.2019
(73) Proprietor: Bendix Commercial Vehicle Systems LLC, Avon, Ohio 44011 (US); KNORR-BREMSE Systeme für Nutzfahrzeuge GmbH, 80809 München (DE)
(72) Inventor: SCHROPP, Josef, 94428 Eichendorf (DE); SCHOENAUER, Manfred, 80995 Muenchen (DE); PAHLE, Wolfgang, 83707 Bad Wiessee (DE); BARTEL, Markus, 80992 Muenchen (DE); FISCHL, Tobias, 80336 Muenchen (DE); BAUMGARTNER, Johann, 85368 Moosburg (DE); PETSCHKE, Andreas, 94127 Neuburg am Inn (DE); BOHMANN, Markus, 85375 Neufahrn bei Freising (DE); LANTZ, Richard L., Elyria Ohio 44035 (US); TEKESKY, Robert S., Elyria Ohio 44035 (US)
(74) Representative: Kleine, Hubertus
(86) International application number: PCT/US2017/019616
(87) International publication number: WO 2017/151477

(56) References cited:
- EP-A1- 0 311 239
- EP-A1- 1 519 070
- EP-A1- 2 184 506
- EP-A1- 2 495 470
- EP-A2- 1 391 628
- EP-A2- 2 050 978
- EP-A2- 2 050 978
- WO-A1-2007/051618
- WO-A1-2015/022081
- WO-A1-2017/083377
- DE-A1- 102012 109 783
- DE-A1- 102013 101 781
- DE-A1- 102014 107 227
- DE-A1- 19 849 309
- DE-B3- 102011 115 304
- GB-A- 1 130 549
- GB-A- 1 576 503
- NL-A- 9 100 025
- US-A- 3 920 104
- US-A- 4 445 595
- US-A- 4 699 255
- US-A- 6 003 642
- US-A1- 2005 194 223
- US-A1- 2006 054 425
- US-A1- 2006 054 430
- US-A1- 2007 137 952
- US-A1- 2010 258 384
- US-A1- 2014 345 983
- US-A1- 2015 014 103
- US-A1- 2015 211 589
- US-A1- 2016 160 945
- US-B1- 8 544 614

## Description

### BACKGROUND AND SUMMARY OF THE INVENTION

The present invention relates to a disc brake according to the preamble of claim 1. The invention also relates to a brake pad set for a disc brake.

Such disc brakes are used in commercial vehicles in particular and are often provided with pneumatic actuation. One embodiment of the brake caliper of such a disc brake is designed as a disc caliper and is used in a tight installation space, for example.

The brake caliper is usually connected to the so-called brake carrier by two bearing spars, which are designed as fixed bearings and loose bearings. The brake pads of the disc brakes are guided displaceably in the brake carrier and are held in a spring-loaded connection by pad retainer brackets in pad slots in the brake carrier.

In the case of disc brakes, in particular disc brakes having only one force-introducing element, uneven wear may occur on the brake pads due to the design. The brake pads may develop wear that is not parallel relative to a plane through their pad carrier plates in the radial direction, on the one hand, but also in the circumferential direction. This is referred to as radial wear and tangential wear, respectively.

One example of a spring-loaded pad retaining bracket is described in german patent document no. DE 20 2008 013 446 U1.

Brake pad retainer systems are disclosed in International patent document no. WO 2013/143993 A1, German patent document no. DE 10 2012 002 734 A1, and U.S. patent no. US 8,540,061 B1. U.S. patent no. US 2007/0137952 A1 discloses a spring member for a disk brake, in which the brake pads are located in form-fitting engagement with pad slot of a brake carrier with respect to a radial direction perpendicular to a rotation axis of the brake disc and wherein the spring member is mounted on the brake carrier and has a first U-shaped portion suitable for forming a connection with a protuberance of the brake carrier, a first resilient portion suitable for acting on both action side and reaction side brake pads in a tangential direction, and a second resilient portion suitable for acting on the brake pads in a radial direction.

Brake pad retainer systems are disclosed in International patent document no. WO 2013/143993 A1, German patent document no. DE 10 2012 002 734 A1, and U.S. patent no. US 8,540,061 B1.

Against the background of these approaches, there is still a constant demand for brakes and brake components that have a longer lifetime with a reduced cost at the same time.

An object of this invention is therefore to create an improved disc brake.

The invention achieves these and other objects, by a disc brake for a vehicle, in particular for a commercial vehicle, with the features of claims 1, 2 and 3.

The tensile force acting radially outward makes it possible for the brake pad to be pulled into its form-fitting retainer, thus advantageously permitting a reduction in tangential wear.

It is possible to create the tensile force through an advantageously simple arrangement with at least one pad retaining spring, which is supported on a brake carrier horn of the pad slot after the brake pad has been installed.

In addition, there is the advantage that the pad retaining spring is no longer supported on a pad retainer bracket and the brake pad with the pad rear plate can no longer strike the pad retaining spring. Therefore, damage to the pad retaining spring can be reduced and its lifetime can be increased.

Engaging the at least one brake pad on the clamping side in a form-fitting manner with a pad rear plate in the pad slot of the brake carrier with contours of brake carrier horns makes it possible to secure the brake pad on the clamping side in both radial directions with respect to the axis of rotation of the brake disc.

By providing that the contours of the brake carrier horns correspond to the contours of the pad rear plate, wherein undercut surfaces of the contours of the brake carrier horns are each engaged, free of play, with undercut surfaces of protrusions on the pad rear plate, it is therefore possible to further improve the reduction in wear.

Mounting the at least one pad retaining spring on the pad rear plate creates a compact brake pad.

Mounting the at least one pad retaining spring on the top side of the pad rear plate permits space savings.

When at least one of the pressure sections is supported on the at least one brake carrier horn of the pad slot of the brake carrier, an advantageously simple tensile force is created on the brake pad and no additional measures are required on the brake carrier.

In one embodiment, the at least one pad retaining spring is mounted on a top side of the pad rear plate by means of at least one spring retainer. This permits advantageous weight savings.

For an advantageously simple means of creating a tensile force, which acts on the brake pad, the at least one pressure section is supported on the at least one brake carrier horn of the pad slot of the brake carrier.

According to the claim 1 embodiment it is provided that the at least one pad retaining spring is held in a form-fitting manner in the pad rear plate. This advantageously permits retention and introduction of a tensile force.

The at least one pad retaining spring here has a central section with a retaining section and two connecting sections, two arms and two pressure sections, wherein the retaining section is held in a form-fitting manner in a retaining opening in the pad rear plate and the two connecting sections are held in a slot in the pad rear plate. This is advantageous because no additional retainers are necessary, on the one hand, and, on the other hand, simple installation of the pad retaining spring by simple insertion is possible.

According to the claim 2 embodiment, the retaining section has a circular cross section with a central axis running parallel to an axis of rotation of the brake disc and designed like a pipe clamp with two connecting sections. This is simple to manufacture, for example, when the pad retaining spring is manufactured as a punched/bending part.

The retaining opening is designed as a through-opening or as a blind hole with a circular cross section or with a different cross section, such as, for example, a triangular or polygonal cross section, wherein the retaining opening is connected to the top side through the slot and is at a distance from the top side of a fastening section in the radial direction. This yields a simple and compact design without any additional parts.

If the pad retaining spring has a constant width over the total length of the pad rear plate, wherein the pad retaining spring protrudes beyond the pad rear plate in the direction of a friction lining, then a simplified assembly is possible because the pressure sections of the pad retaining spring come in contact first with the brake carrier horn(s) due to the protrusion of the pad retaining spring when the brake pad is installed. Pressing on the brake pad then creates the prestress on the pad retaining spring, so that the brake pad is then displaced into the brake carrier.

If the pad retaining spring has at least one slot through which a guide protrusion on the pad rear plate extends, an advantageously simple guidance and fixation of the pad retaining spring on the pad rear plate are made possible.

If the pressure sections each protrude laterally away from the pad rear plate on one end of the top side of the pad rear plate, this also yields a compact design in this embodiment, on the one hand, and simplified assembly, on the other hand.

It is advantageous here that at least one of the pressure sections is supported on the at least one brake carrier horn of the pad slot of the brake carrier, thus creating a tensile force acting on the brake pad.

The claim 3 embodiment provides that each spring retainer has a plate-shaped protrusion, which extends away from a top side of the pad rear plate and to which the at least one pad retaining spring is fastened. Weight can be saved in this way and a compact design is made possible.

In one embodiment, the at least one pad retaining spring is designed in the form of a hood, which results in easy assembly.

In this regard, the at least one pad retaining spring has a base plate, two fastening straps and a spring arm, each with a pressure section, so that the at least one pad retaining spring is mounted with the fastening straps on the respective protrusion. The pad retaining spring may advantageously be produced easily as a punched/bending part.

It is advantageous that the at least one pad retaining spring is mounted in a form-fitting manner on the respective protrusion because simple assembly and positioning on the protrusion are possible in this way.

If the at least one pad retaining spring is mounted securely and in a form-fitting manner on the respective protrusion, this yields the advantage of a safety against loss. Such a form-fitting and secure mounting can be established by riveting, bolting and the like, for example.

The spring arm of the at least one pad retaining spring is fastened to the base plate by a curved connecting section. This yields the advantage of creating an additional spring force.

In addition, the curved connecting section can communicate with the shape of a contact surface of the protrusion, so that an advantageous and compact support of the connecting section in the uninstalled state of the brake pad is possible.

### BRIEF DESCRIPTION OF THE DRAWINGS

It is advantageous here that the at least one pressure section is supported on the at least one brake carrier horn of the pad slot of the brake carrier, thereby creating a tensile force acting on the brake pad.

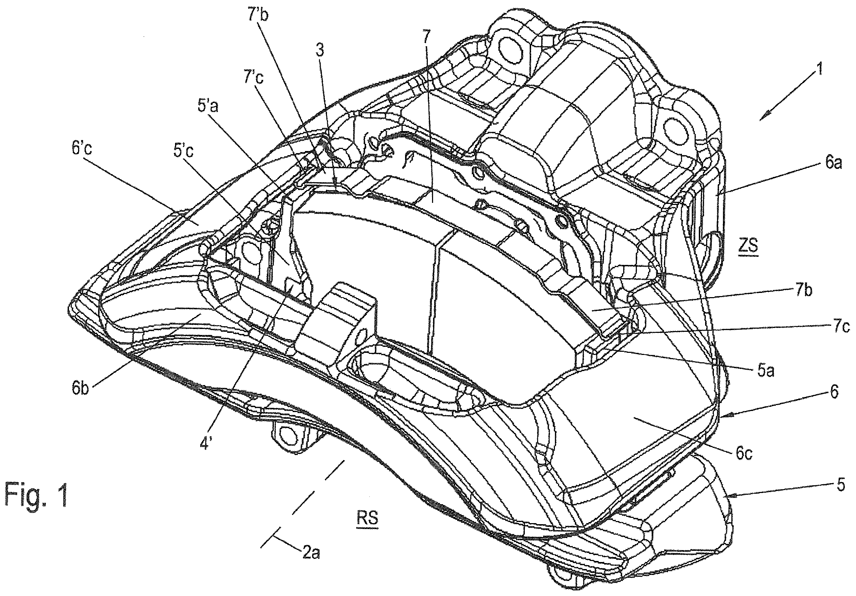

Other objects, advantages and novel features of the present invention will become apparent from the following detailed description of one or more preferred embodiments when considered in conjunction with the accompanying drawings. In the drawings figures 1 to 20 and 37 to 39 show examples not falling within the scope of the claims.
Figure 1 shows a schematic perspective view of a first example of a disc brake;
Figures 2-4 show schematic partial views of a brake carrier and brake pad of the disc brake shown in Figure 1;
Figures 5-7 show schematic views of the brake carrier of the disc brake shown in Figure 1;
Figures 8-9 show schematic views of a second example of the disc brake;
Figures 10-11 show schematic enlarged partial views of the second example shown in Figures 8-9;
Figures 12-13 show schematic partial views of a third example of the disc brake;
Figure 14 shows a schematic perspective view of a pad rear plate of a brake pad of the third example according to Figures 12-13;
Figure 15 shows a schematic perspective view of a pad retaining spring of the third example according to Figures 12-13;
Figure 16 shows a schematic perspective view of a fastening element of the pad retaining spring of the brake pad of the example according to Figures 12-13;
Figures 17-18 show schematic partial views of a fourth example of the disc brake;
Figure 19 shows a schematic perspective view of a pad rear plate of a brake pad of the fourth example according to Figures 17-18;
Figure 20 shows a schematic perspective view of a pad retaining spring of the example according to Figures 17-18;
Figure 21 shows schematic partial views of a fifth example of the disc brake being a first embodiment according to the invention;
Figures 22-24 show schematic enlarged partial views of the disc brake as shown in Figure 21;
Figure 25 shows a schematic partial view of a sixth example of the disc brake being a second embodiment according to the invention;
Figure 26 shows a schematic top view of a pad rear plate of a brake pad of the embodiment shown in Figure 25;
Figure 27 shows a schematic perspective view of a pad retaining spring of the brake pad shown in Figures 25 and 26;
Figure 28 shows a schematic perspective view of the brake pad shown in Figures 25 and 26;
Figure 29 shows a schematic partial view of a seventh example of the disc brake being a third embodiment according to the invention;
Figures 30-31 show schematic enlarged partial views of the disc brake shown in Figure 29;
Figures 32-33 show schematic perspective views of pad retaining springs of the disc brake shown in Figure 29;
Figure 34 shows a schematic view of a brake pad of one variant of the third embodiment shown in Figure 29;
Figures 35-36 show schematic perspective views of pad retaining springs of the variant of the third embodiment shown in Figure 34;
Figure 37 shows a schematic view of a brake pad according to another example being a variant of the disc brake shown in Figure 29, and
Figures 38-39 show schematic perspective views of pad retaining springs of the additional example shown in Figure 37.

### DETAILED DESCRIPTION

Terms such as "above," "below," "right," "left," etc. relate to directions and arrangements in the figures.

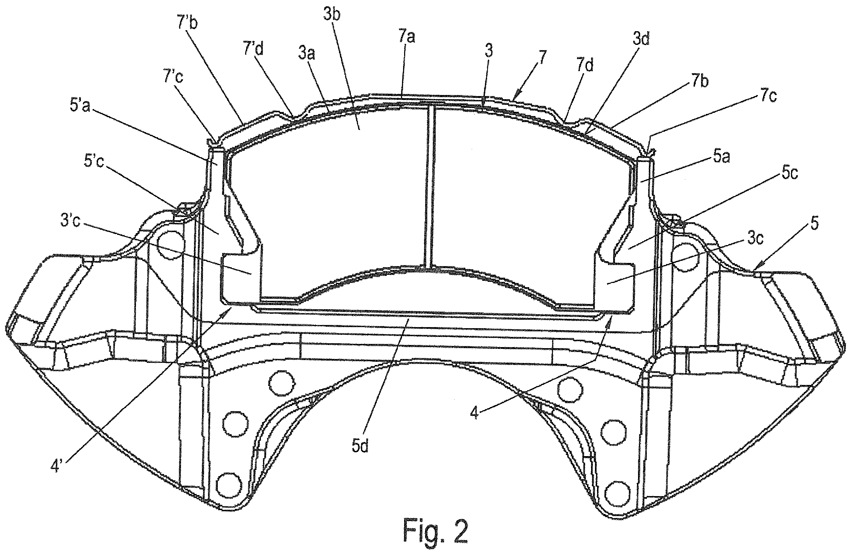

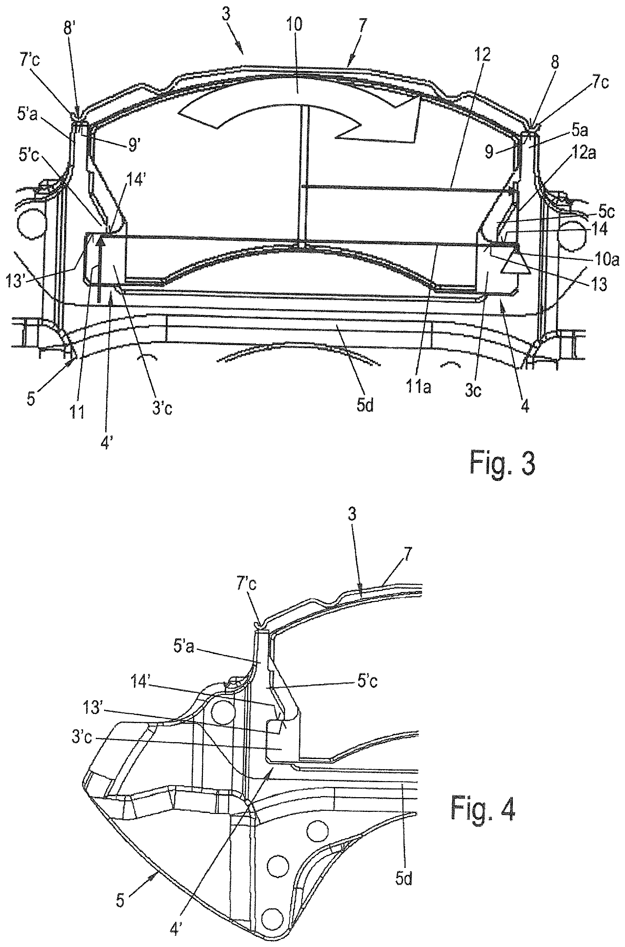

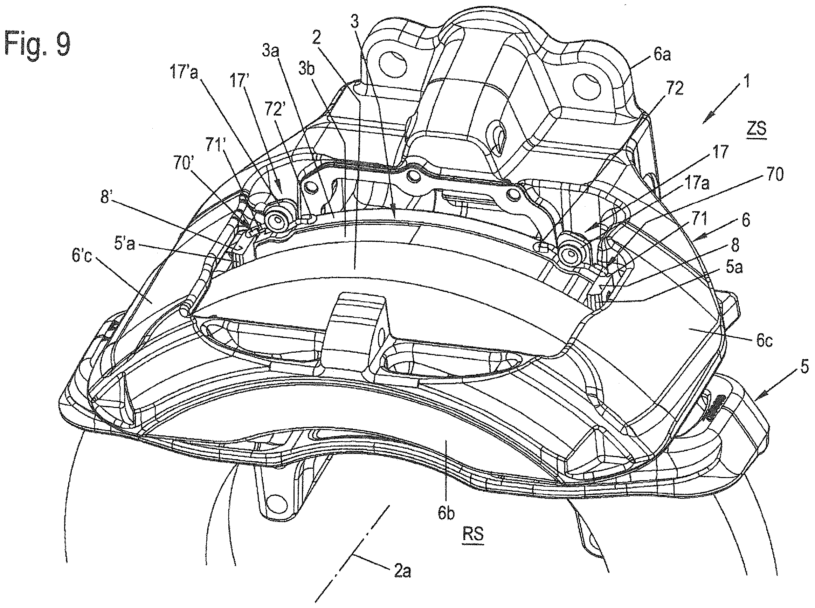

Figure 1 shows a schematic perspective view of the first example of a disc brake 1, for example, a pneumatic disc brake 1. Schematic partial views of a brake carrier 5 of the disc brake 1, as shown in Figure 1, can be seen in Figures 2 through 4 with a brake pad 3. Figure 1 does not show a brake disc 2 for the sake of simplicity, but it can be imagined easily by reference to Figure 9. Figure 2 shows a top view of a friction lining 3b of the brake pad 3 in a brake carrier 5. Figure 3 shows forces 11, 12 acting on brake pad 3. Figure 4 shows an enlarged diagram of one side of the brake pad 3 engaged with a brake carrier horn 5'a.

The disc brake 1 is part of the brake system of a vehicle, for example, in particular a commercial vehicle, and comprises the brake disc 2 with an axis of rotation 2a of the brake disc and two brake pads 3 arranged on both sides of the brake disc 2. Of the two brake pads 3, only one so-called clamping-side brake pad 3 is shown. The other brake pad is easy to imagine. In addition, the disc brake 1 includes the brake carrier 5, a brake caliper 6 and a clamping device (not shown).

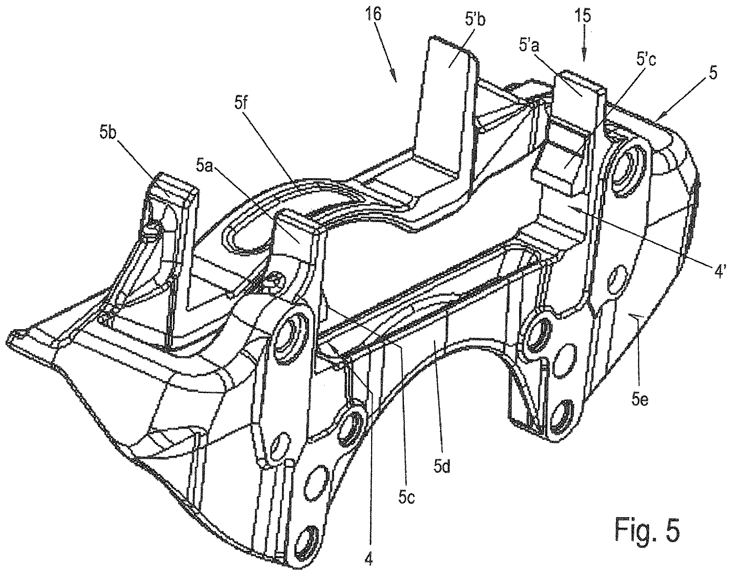

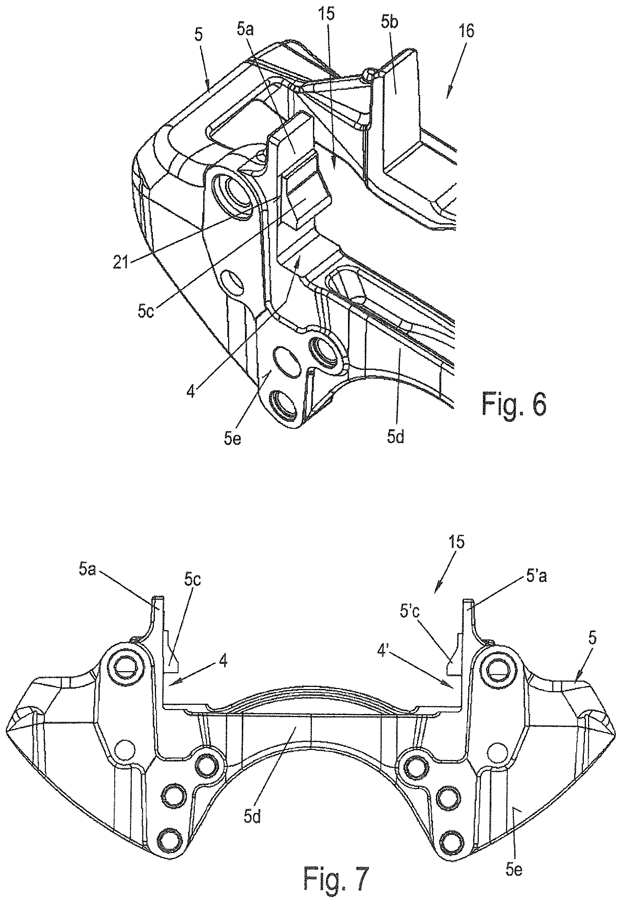

The brake pad has a pad rear plate 3a to which the friction lining 3b is attached. The brake pads 3 are each held in a pad slot 15, 16 (see also Figures 5, 6) between two brake carrier horns 5a, 5'a, 5b; 5'b in the brake carrier 5 and are retained in the brake carrier 5. A pad retaining bracket (not shown) serves to retain the brake pads 3. At least the brake pad 3 is guided displaceably in the respective pad slot 15 in the direction of the axis of rotation 2a of the brake disc. It is assumed here that, while the respective vehicle is traveling in a forward direction, the brake disc 2 rotates in a main direction of rotation 10 (Figure 3) about the axis of rotation 2a of its brake disc in forward travel of the vehicle. Thus the side of the brake caliper 6 situated on the left in Figure 1 is designated as the intake side and the side of the brake caliper 6 on the right is designated as the outlet side. Accordingly, the brake carrier horns 5'a, 5'b are designed as brake carrier horns 5'a, 5'b on the intake side and the brake carrier horns 5a, 5b on the opposite side are designated as brake carrier horns 5a, 5b on the outlet side. Unless otherwise indicated, components and modules, which are assigned to the inlet side below, are characterized with an apostrophe after the respective reference numeral.

The brake caliper 6 here is designed as a sliding caliper and has a clamping section 6a and a rear section 6b, which are connected to one another on each end by means of connecting sections 6c, 6'c in the direction of the axis of rotation 2a of the brake disc. The clamping section 6a and the rear section 6b are each arranged on one side of the brake disc 2 and parallel to it, wherein the connecting sections 6c extend parallel to the axis of rotation 2a of the brake disc in the y direction. The clamping section 6a and the rear section 6b together with the connecting sections 6c form an opening over the brake disc 2 with the brake pads 3 for accessing these for mounting, replacement and maintenance and repair work.

The clamping section 6a of the brake caliper 6 receives the clamping device of the disc brake 1. The clamping device serves to actuate the disc brake 1 and may have a brake rotary lever with a compressed air cylinder, for example. This will not be described further here.

The side of the disc brake 1, on which the clamping section 6a of the brake caliper 6 with the clamping device is arranged, is designated below as the clamping side ZS. The other side of the disc brake 1 on which the rear section 6b of the brake caliper 6 is arranged is designated as the rear side RS, also referred to as the reaction side. These terms "clamping side" and "rear side" and additional designations referring to them are customary and are used for better orientation.

Thus the brake pad 3 with the pad rear plate 3a, which is located on the clamping side ZS, is designated as the brake pad 3 on the clamping side, and the brake pad opposite it is referred to as the brake pad on the rear side accordingly.

The brake pad 3 on the clamping side is acted upon by the clamping device in braking operations with a clamping force in the direction of the axis of rotation 2a of the brake disc. The rear side brake pad, which is not shown here but is easy to imagine, is accommodated in the rear section 6b of the brake caliper 6 and has relative movements to the rear section 6b in this disc brake 1 with the brake caliper 6 in the sliding caliper embodiment.

The brake pad 3 on the clamping side is provided with a pad retaining spring 7 on a top side 3d of the pad rear plate 3a. The pad retaining spring 7 (Figure 2) comprises a central section 7a, arms 7b, 7'b, pressure sections 7c, 7'c and transitional sections 7d, 7'd.

The central section 7a is fastened to the top side 3d of the pad rear plate 3a approximately at the center of the top side 3d and extends toward both sides in the longitudinal direction of the pad rear plate 3d (i.e., in parallel to the brake disc 2 in the installed state of the brake pad 3) each for a length corresponding approximately to one-fourth of the length of the pad rear plate 3d in the longitudinal direction. The central section 7a can be fastened, for example, by welding, riveting, screwing and the like.

A transitional section 7d, 7'd is mounted on each end of the central section 7a, by means of which one arm 7b, 7'b is connected to the central section 7a. The transitional sections 7d, 7'd are each designed with a curved shape, wherein they have a convex curvature toward the top side 3d of the pad rear plate 3a. In this way, the transitional sections 7d, 7'd are each in linear contact with the top side 3d of the pad rear plate 3a. The linear contact runs parallel to the axis of rotation 2a of the brake disc in the installed state of the brake pad 3 in this example. Other forms of contact are naturally also possible, for example, single-point contact, multipoint contact, multiline contact, etc.

The convex transitional sections 7d, 7'd span the central section 7a, so that they are pressed onto the top side 3d by means of the spring force of the central section 7a.

Each transitional section 7d, 7'd develops into a respective arm 7b, 7'b. Each arm 7b, 7'b extends up to the respective end of the top side 3d of the pad rear plate 3a and is in contact with this in its respective end when the brake pad 3 is not installed.

A pressure section 7c, 7'c which is mounted on each free end of an arm 7b, 7'b and protrudes beyond the respective end of the top side 3d in the longitudinal direction of the pad rear plate 3a, is pressed by the spring force of the central section 7a, of the transitional sections 7d, 7'd and of the arms 7b, 7'b onto the top side 3d of the pad rear plate 3a.

Each pressure section 7c, 7'c is designed with a convex curvature, so that its convex side faces downward toward the pad rear plate 3a. The curvature of the pressure sections 7c, 7'c is smaller than the curvature of the transitional sections 7d, 7'd.

The width of the pad retaining spring 7 is constant in this example and corresponds here approximately to the thickness of the pad rear plate 3a. The width and thickness run in the direction of the axis of rotation 2a of the brake disc. The width of the pad retaining spring 7a may of course also be different with respect to the pad rear plate 3a and/or may not run consistently.

The pad slot 15 on the clamping side is bordered by the brake carrier horns 5a, 5'a on both sides and is closed by a strut 5d on its lower side. Each brake carrier horn 5a, 5'a has a lug 5c, 5'c with rounded corners protruding inward into the pad slot 15 approximately at its center in a direction perpendicular to the axis of rotation 2a of the brake disc. Beneath each lug 5c, 5'c there is an undercut 4, 4', which is shaped outward, i.e., extending away from the pad slot 15 in a plane parallel to the brake disc 2 and into the respective brake carrier horn 5a, 5'a and forming a contour with the lug 5c, 5'c. Each undercut 4, 4' runs beneath each lug 5c, 5'c, first running parallel to the strut 5d into the respective brake carrier horn 5a, 5'a. Then this respective contour runs at a right angle in the brake carrier horn 5a, 5'a, running downward to a support, which extends in turn at a right angle to the inside of the pad slot 15 over a distance corresponding approximately to the length of the undercut 4, 4' beneath each lug 5c, 5'c. These supports are connected by the struts 5d, wherein a top side of the strut 5d is arranged deeper, i.e., further toward the axis of rotation 2a of the brake disc, than the surfaces of the supports.

Each side of the pad rear plate 3a on the clamping side cooperating with the respective brake carrier horn 5a, 5'a also has a contour, which corresponds to the respective contour of the respective brake carrier horn 5a, 5'a. In other words, the shape of each lug 5c, 5'c is molded into the respective side of the pad rear plate 3a with a rectangular protrusion 3c, 3'c of the pad rear plate 3a being formed, corresponding to the respective undercut 4, 4' of a brake carrier horn 5a, 5'a. In this way, the brake pad 3 on the clamping side with its pad rear plate 3a is held in the pad slot 15 on the clamping side in the contours with the lug 5c, 5'c and with the undercut 4, 4' in a form-fitting manner such that the brake pad 3 on the clamping side is guided displaceably in the direction of the axis of rotation 2a of the brake disc but is secured in a direction perpendicular to the axis of rotation 2a of the brake disc. Then only the end regions of the bottom side of the pad rear plate 3a on the clamping side rest on the respective supports at the ends of the struts 5d.

In Figure 2 the brake pad 3 has been inserted into the pad slot 15 of the brake carrier 5. This takes place first through radial insertion of the brake pad 3 into the interspace between the pad slots 15, 16 (Figures 5, 6).

The pad retaining spring 7 is supported during assembly first on a brake carrier horn 5a, 5'a on one side, so that the brake pad 3 can thereby be forced into one of the undercuts 4, 4' of the brake carrier 5. Next the brake pad 3 is secured in the pad slot 15 of the brake carrier 5 and can be shifted into its working position by means of the brake caliper 6 in the axial direction, i.e., in the direction of the axis of rotation 2a of the brake disc.

The contours of the sides of the pad rear plate 3a of the brake pad 3 come into engagement with the contours of the lugs 5c, 5'c and of the undercuts 4, 4' in this way and form a form-fitting contact. The convex sides of the pressure sections 7c, 7'c of the pad retaining spring 7 are then each in contact along their contact sections 9, 9' for resting on the support sections 8, 8' (Figure 3) on the top sides of the brake carrier horns 5a, 5'. In doing so, the pad retaining spring 7 is supported here on the brake carrier horns 5a, 5'a on the clamping side and is stressed in the upper direction against the spring force of the pad retaining spring 7.

The pad retaining spring 7, which is stressed on both ends in this way, exerts a tensile force outward in the radial direction away from the axis of rotation 2a of the brake disc. This results in contact of the brake pad 3 with the undercuts 14, 14' of its protrusions 3c, 3'c on the undercut surfaces 13, 13' on the bottom sides of the lugs 5c, 5'c of the brake carrier horns 5a, 5'a with no play.

To reduce tangential wear (over the longitudinal side, i.e., the long side of the brake pad 3), in particular in single-stamp embodiments of the disc brake 1, a frictional force 11 is created on the undercut surface 13', 14' on the intake side by means of lever kinematics. This generates a torque around a pivot point 10a with a lever arm 11a. The pivot point 10a here is at a point of contact between an upper corner edge of the protrusion 3a on the outlet side and a lower corner edge of the lug 5c of the brake carrier horn 5a on the outlet side between the undercut surfaces 13 and 14.

This torque acts against an intake torque (force 12 with a lever arm 12a - a known effect, which causes greater wear on the intake side of the friction lining 3b due to the pad rear plate 3a of the brake pad 3 being supported on the brake carrier horn 5a on the outlet side) and thus compensates for a portion of the (tangential) pad wear.

For optimal utilization of this effect, the undercut surfaces 13, 14, 13', 14' are designed so that, in the installed state of the brake pad 3, they are engaged with no play.

Figures 5 through 7 show schematic views of the brake carrier 5 according to Figures 2 through 4 of the disc brake 1, as shown in Figure 1.

Figure 5 shows a perspective view of the brake carrier 5, as seen from the clamping side ZS (Figure 1) with a view of the fastening side 5e of the brake carrier 5. The pad slot 15 on the clamping side with the brake carrier horns 5a, 5'a and the lugs 5c, 5'c protruding into the pad slot 15 can be seen clearly. The rear pad slot 16 has brake carrier horns 5b, 5'b without lugs, connected by a strut 5f in parallel with the strut 5d.

Figure 6 shows the undercut 4 on the outlet side in an enlarged perspective view.

Figure 7 shows a top view of the fastening side 5e of the brake carrier 5. The brake carrier 5 is mounted with its fastening side 5e on stationary fastening sections of the vehicle provided for this purpose.

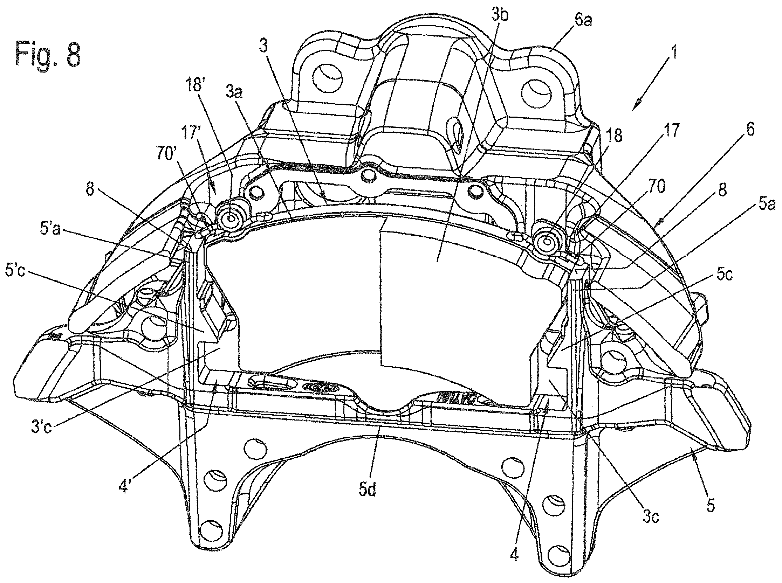

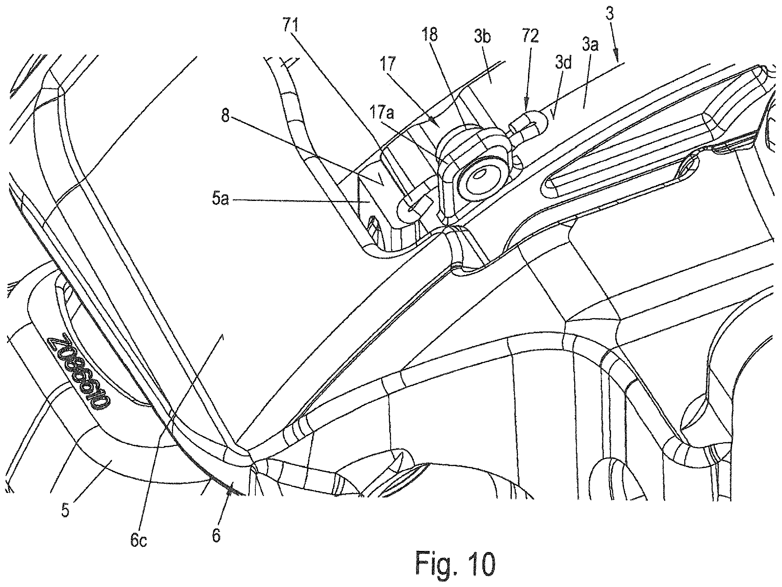

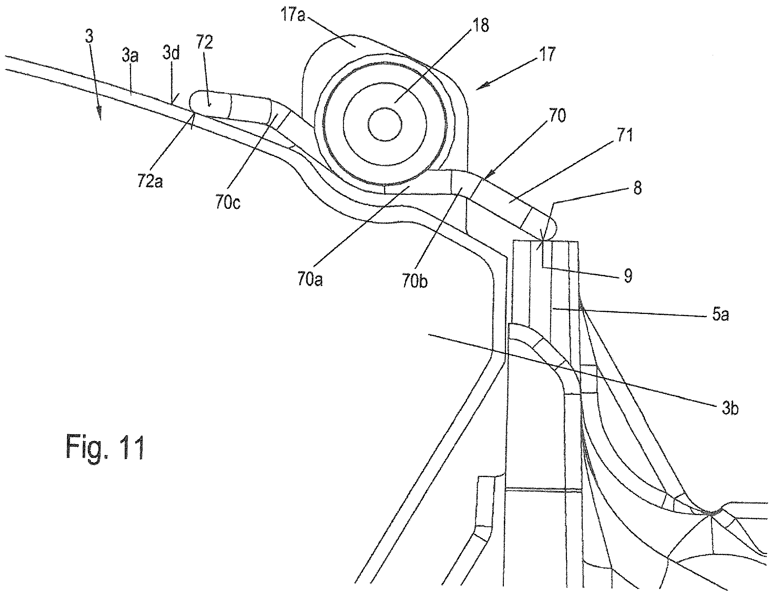

Figures 8 and 9 show schematic views of a second example of the disc brake 1, wherein Figure 8 shows a partial sectional view, in which the section runs through the brake carrier 5 in a plane parallel to the brake disc plane. Figure 9 shows a perspective view of the second example of the disc brake 1. Figures 10 and 11 show schematic enlarged partial views of the second example of the disc brake 1, as shown in Figures 8 through 9.

In this second example, the components of the disc brake 1 are the same as those in the first example, except for the brake pad 3. Therefore, only the differences in the brake pad 3 are discussed in the remaining text.

The brake pad 3 on the clamping side also has a pad rear plate 3a with a friction lining 3b in this example. The pad rear plate 3a is provided with contours, which correspond to the contours of the lugs 5c, 5'c and the undercuts 4, 4'. This was already described above in conjunction with the first example.

The pad rear plate 3a is designed in its side regions on the top side 3d with a spring retainer 17, 17' for each of at least one pad retaining spring 70, 70'. Each spring retainer 17, 17' includes a protrusion 17a, 17'a which protrudes upward away from the pad rear plate 3a. Each protrusion 17a, 17'a is plate-shaped and protrudes upward with approximately twice the thickness of the pad rear plate 3a. An extension of each protrusion 17a, 17'a in the longitudinal direction of the pad rear plate 3a also corresponds approximately to a double thickness of the pad rear plate 3a. Each protrusion 17a, 17'a is arranged with an offset toward the center at a distance from each side of the pad rear plate 3a in its longitudinal direction, wherein this distance corresponds approximately to the thickness of the pad rear plate 3a.

The rear surface of each protrusion 17a, 17'a facing the clamping side ZS is flush with the rear surface of the pad rear plate 3a facing the clamping side ZS.

A retaining element 18, 18' is mounted at the center of the side facing toward the friction lining 3b of each protrusion 17a, 17'a. In this example, this retaining element 18, 18' is a roller mounted fixedly or so that it can rotate about an axis running parallel to the brake disc axis 2a. This roller may be designed as a cable roller, for example. The top side 3d of the pad rear plate 3a is provided with an arc-shaped recess in the region beneath each retaining element 18, 18', this recess corresponding to the diameter of the roller of the retaining element 18, 18' and each retaining element 18, 18' being arranged at a distance from this recess.

A pad retaining spring 70, 70' is arranged between each retaining element 18, 18' and the top side 3d of the pad rear plate 3a and is prestressed due to its shape and the arrangement between each retaining element 18, 18' and the respective recess of the top side 3d. This prestress causes each pad retaining spring 70, 70' to be in contact with the top side 3d of the pad rear plate 3a at one end, wherein the other end protrudes beyond the respective end of the top side 3d in the longitudinal direction of the pad rear plate 3a and rests on this end of the top side 3d in the uninstalled state of the brake pad 3 in a prestressed form.

Each pad retaining spring 70, 70' comprises a central section 70a, transitional sections 70b and 70c, at least one pressure section 71, 71' and at least one bearing section 72, 72'.

The pad retaining spring 70 on the outlet side is described below. The design of the pad retaining spring 70' on the inlet side is embodied in mirror image.

A transitional section 70b, 70c is mounted on each end of the central section 70a. The transitional section 70b faces one end of the top side 3d of the pad rear plate 3a and connects the central section 70a to the pressure section 71. The transitional section 70c is mounted on the other side of the central section 70a, faces the center of the top side 3d and connects the central section 70a to the bearing section 72. Each transitional section 70b, 70c is shaped with respect to the top side 3d so that it curves toward it.

The pressure section 71 has a contact section 9 on the bottom side of its free end, resting on the supporting section 8 of the brake carrier horn 5a in the installed state of the brake pad 3. When the brake pad 3 is not installed, the pressure section 71 rests on one end of the top side 3d of the pad rear plate 3a.

On the bottom side of its free end, the bearing section 72 has a supporting section 72a, which is constantly in contact with the top side 3d of the pad rear plate 3a.

The central section 70a is arranged between the retaining element 18 and the recess in the top side 3d of the pad rear plate 3a beneath it, wherein the central section 70a does not come in contact with the top side 3d. This is made possible by the recess as well as by the design of the retaining element 18 as a cable roller.

The transitional sections 70b, 70c span the central section 70a, so that the pressure section 71 is pressed by the spring force of the central section 7a, either onto the end of the top side 3d or onto the brake carrier horn 5a. At the same time, the central section 70a, which is spanned in this way, causes the bearing section 72 to also be pressed against the top side 3d.

The pad retaining springs 70, 70' in this example are made of a spring wire material. The ends here are curved accordingly to form the pressure section 71, 71' and the bearing section 72, 72'. This yields spot-shaped and arc-shaped contact sections in interaction with the respective supporting surfaces.

The brake pad 3 is assembled as described for the first example.

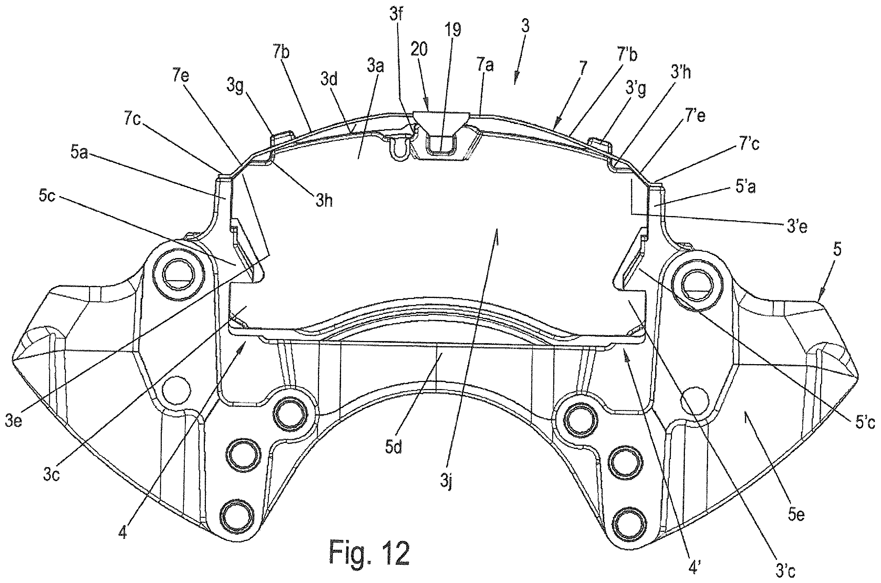

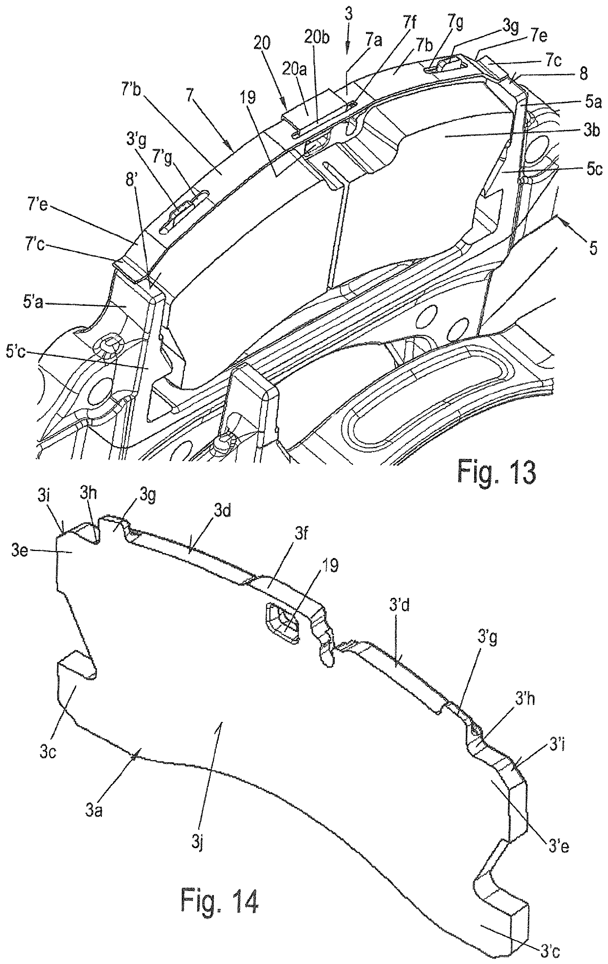

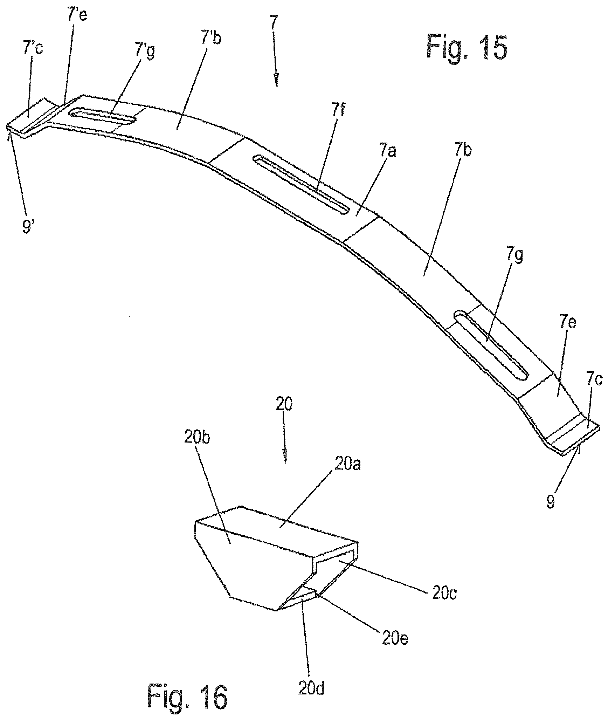

Figures 12-13 show schematic partial views of a third example of the disc brake 1, wherein Figure 12 shows a view of the actuating side 3j of the pad rear plate 3 from the clamping side ZS (Figure 1). Figure 13 shows a view from the brake disc 2. Figure 14 shows a schematic perspective view of a pad rear plate 3a of a brake plate 3 of the third example according to Figures 12-13 on the actuating side 3j. Figure 15 shows a schematic perspective view of a pad retaining spring 7 of the exemplary example according to Figures 12-13. Figure 16 shows a schematic perspective view of a fastening element 20 of the pad retaining spring 7 according to Figure 15 of the brake pad 3 of the example according to Figures 12-13.

In this third example, the components of the disc brake 1 are the same as those in the first example, except for the brake pad 3. Therefore, only the differences in the brake pad 3 are discussed in the further discussion.

The brake pad 3 on the clamping side also has a pad rear plate 3a with a friction lining 3b in this example. The pad rear plate 3a is provided with the contours already described above, corresponding to contours of the lugs 5c, 5'c and undercuts 4, 4'.

In contrast with the first example, the pad retaining spring 7 is fastened to a fastening section 3f through a fastening element 20 at its center. The fastening element 20 is described in greater detail below.

In this third example, the pad retaining spring 7 comprises a central section 7a, arms 7b, 7'b, pressure sections 7c, 7'c and intermediate sections 7e, 7'e.

The central section 7a is provided with a slot 7f running in the longitudinal direction of the pad retaining spring 7 to receive a section of a fastening element 20. The slot 7f does not run in an imaginary central line of the pad retaining spring 7 but instead runs with an offset in the direction toward the friction lining 3b and parallel to the imaginary central line of the pad retaining spring 7. This imaginary central line runs in the longitudinal direction of the pad retaining spring 7.

In contrast with the first example, the length of the central section 7a corresponds to approximately one-half the length of the central section 7a of the pad retaining spring 7 of the first example.

An arm 7b, 7'b is mounted at each end of the central section 7a. The arms 7b, 7'b are much longer in contrast with those of the first example, for example, approximately twice as long as the central section.

Each arm 7b, 7'b is provided with a slot 7g, 7'g in the region of its free end. Each slot 7g, 7'g serves to receive a guide protrusion 3g, 3'g.

On each free end of an arm 7b, 7'b, a pressure section 7c, 7'c is mounted by an intermediate section 7e, 7'e. Each intermediate section 7e, 7'e is folded downward from the respective arm end toward the top side 3d of the rear plate 3a at an obtuse angle here. Each pressure section 7c, 7'c is therefore folded upward in the opposite direction on the respective free end of an intermediate section 7e, 7'e. The pressure sections 7c, 7'c each extend laterally over the pad rear plate 3a and protrude away from it at a distance corresponding approximately to the extent of the respect brake carrier horn 5a, 5'a in the longitudinal direction of the pad rear plate 3a.

The fastening section 3f protrudes away from the top side 3d of the pad rear plate 3a and has a complete opening 19, which runs through the pad rear plate 3a in the direction of the axis of rotation 2a of the brake disc. On the side of the pad rear plate 3a, on which the friction lining 3b is mounted, the friction lining 3b is recessed in the region of the opening 19 beneath and next to it, as can be seen clearly in Figure 13.

The fastening element 20 (see Figure 16) is designed here in the form of a clamp and comprises a plate 20a, on each of whose longitudinal sides is mounted a trapezoidal side wall 20b, 20c, each approximately at a right angle. The trapezoidal side walls 20b, 20c run parallel and are connected at their short lower sides by a transverse section 20d. The transverse section 20d is mounted on one side wall 20b at a right angle and connected to the lower side of the other side wall 20c at a joint 20e, for example, a weld. The transverse section 20d runs parallel to the plate 20a and extends through the opening 19 in the assembled state of the pad retaining spring 7. The connection 20e is created after assembly.

In the assembled state, the one trapezoidal side wall 20b is guided through the slot 7f running in the longitudinal direction of the pad retaining spring 7. A wider longitudinal section of the central section 7a of the pad retaining spring 7 is arranged between the side walls 20b, 20c and between the lower side of the plate 20a and the top side 3d of the fastening section 3f of the pad rear plate 3a with a certain play in the radial direction from the axis of rotation 2a of the brake disc.

In the assembled state of the pad retaining spring 7 on the top side 3d of the pad rear plate 3a, the guide protrusions 3g, 3'g each extend through a slot 7g, 7'g in the pad retaining spring 7 and protrude away from the top side of each arm 7b, 7'b. Contact sections 9, 9' on the bottom sides of the pressure sections 7c, 7'c of the pad retaining spring 7 are each in contact with a respective supporting section 8, 8' as already described above.

In this example , the pad rear plate 3a also has upper chamfered corner sections 3e, 3'e each having a chamfer 3i, 3'i. Each chamfer 3i, 3'i develops into a guide protrusion 3g, 3'g and into the top side 3d of the pad rear plate 3a by way of a recess 3h, 3'h. The recesses 3h, 3'h run from the respective chamfer 3i, 3'i first in a straight section, which then has a curvature in the transition to the respective guide protrusion 3g, 3'g and the top side 3d.

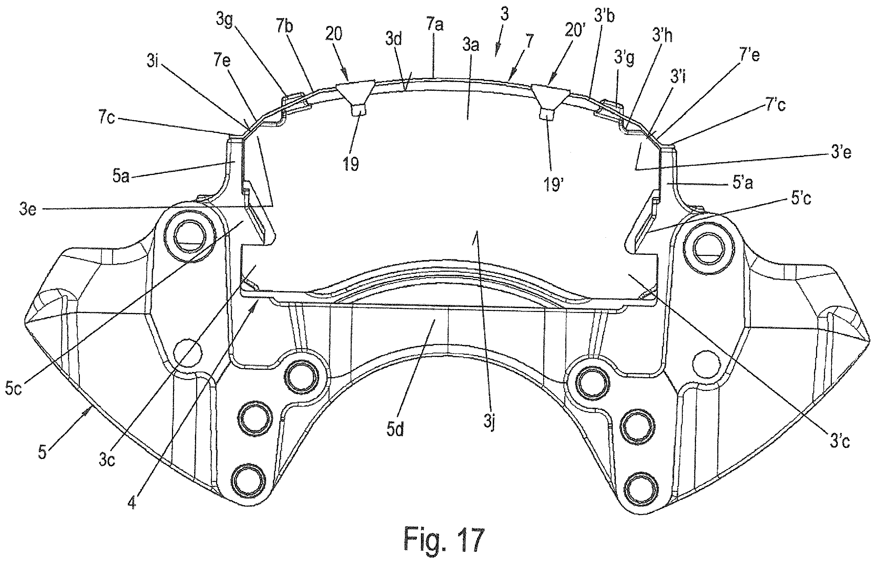

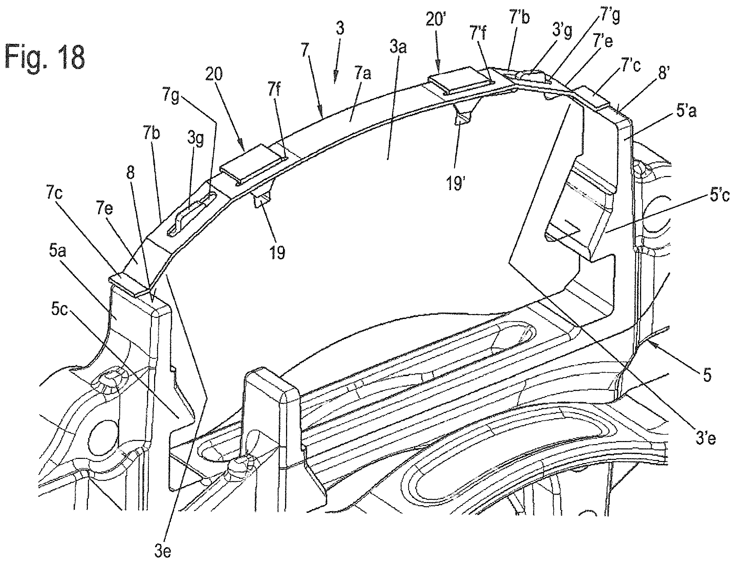

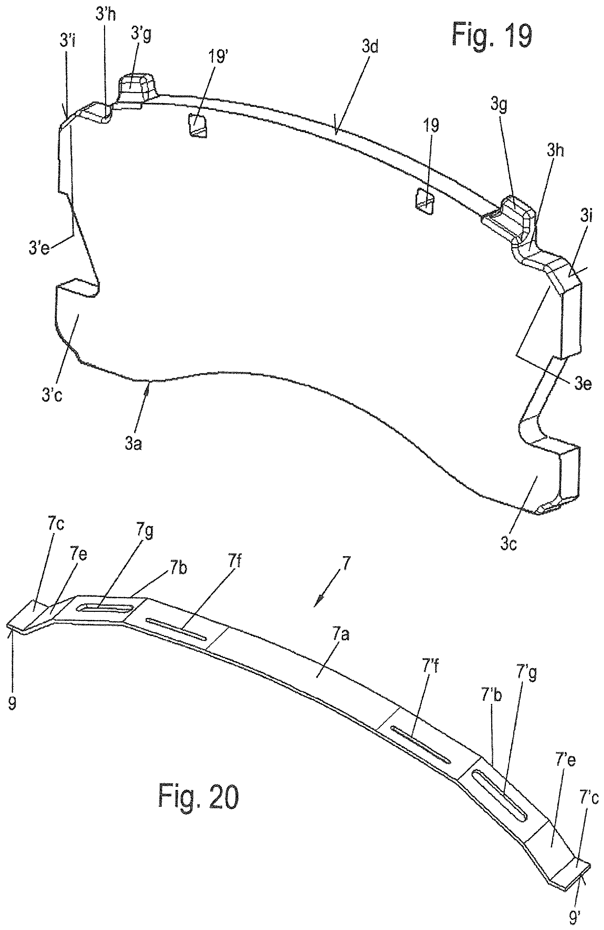

Figures 17-18 show schematic partial views of a fourth example of the disc brake 1, wherein Figure 17 shows a view of the actuating side 3j of the pad rear plate 3 as seen from the clamping side ZS (Figure 1). Figure 18 shows a view of the pad rear plate 3a without the friction lining 3b from the brake disc 2. Figure 19 shows a schematic perspective view of the pad rear plate 3a of the brake pad 3 of the fourth example according to Figures 17-18, as seen from the side of the friction lining 3b. The friction lining 3b is not shown here but is easy to imagine. Figure 20 shows a schematic perspective view of the pad retaining spring 7 of the example according to Figures 17-18.

In contrast with the third example, the pad rear plate 3a does not have a fastening section 3f with an opening 19, but instead has a top side 3d, which is continuous between the guide protrusions 3g, 3'g. In this fourth example, two openings 19, 19' are provided, each being arranged in proximity to a guide protrusion 3g, 3'g. The distance of these openings 19, 19' from one another is less than the distance of the guide protrusions 3g, 3'g among one another.

The pad retaining spring 7 of the fourth example is fastened to the pad rear plate 3a by a fastening element 20, 20' in contrast with the third example in the end region of the central section 7a. The fastening elements 20, 20' are designed in the same example. A description in this regard has already been given above.

The pad retaining spring 7 in this third example comprises the central section 7a, arms 7b, 7'b, pressure sections 7c, 7'c and intermediate sections 7e, 7'e.

The central section 7a is provided with a slot 7f, 7'f for receiving a section of the respective fastening element 20, 20', as described above, this slot running in the longitudinal direction of the pad retaining spring 7.

In contrast with the third example, the length of the central section 7a corresponds approximately to three times the length of the central section 7a of the pad retaining spring 7 of the third example and is somewhat shorter than the distance between the guide protrusions 3g, 3'g.

One arm 7b, 7'b is mounted on each end of the central section 7a. The arms 7b, 7'b are each approximately half as long as an arm 7b, 7'b in the third example.

Each arm 7b, 7'b is provided with a slot 7g, 7'g in the region of its free end. The slots 7g, 7'g each serve to receive a guide protrusion 3g, 3'g.

The pressure section 7c, 7'c is mounted on each free end of an arm 7b, 7'b by an intermediate section 7e, 7'e, as already described in conjunction with the third example.

The pad retaining spring 7 is mounted by the fastening elements 20, 20' on the pad rear plate 3a, so that the central section 7a runs essentially at a constant distance from the top side 3d of the pad rear plate 3a.

A brake pad set has the at least one brake pad 3 on the clamping side and at least one brake pad on the rear side. These brake pads may also be of different lengths.

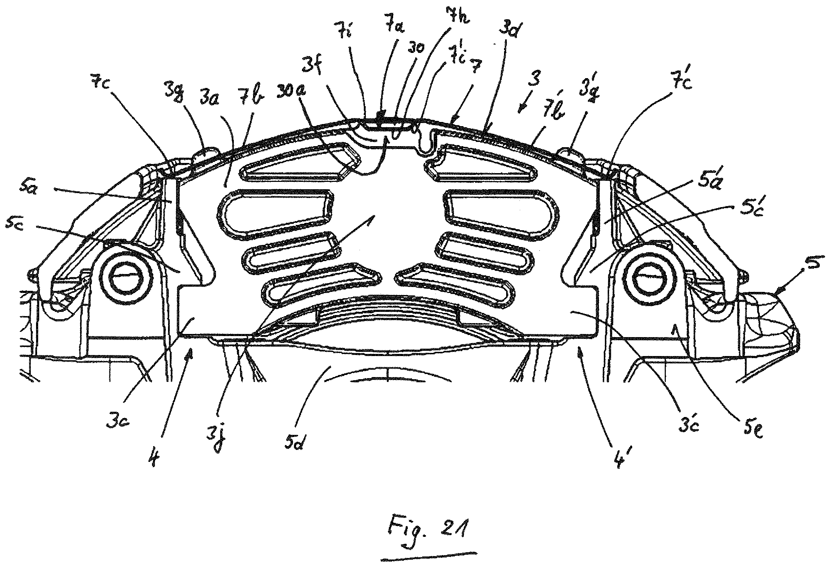

Figure 21 shows a schematic partial view of a fifth example and a first embodiment of the disc brake 1 according to the invention from the direction of the clamping side ZS toward the activating side 3j of the brake pad 3 on the clamping side.

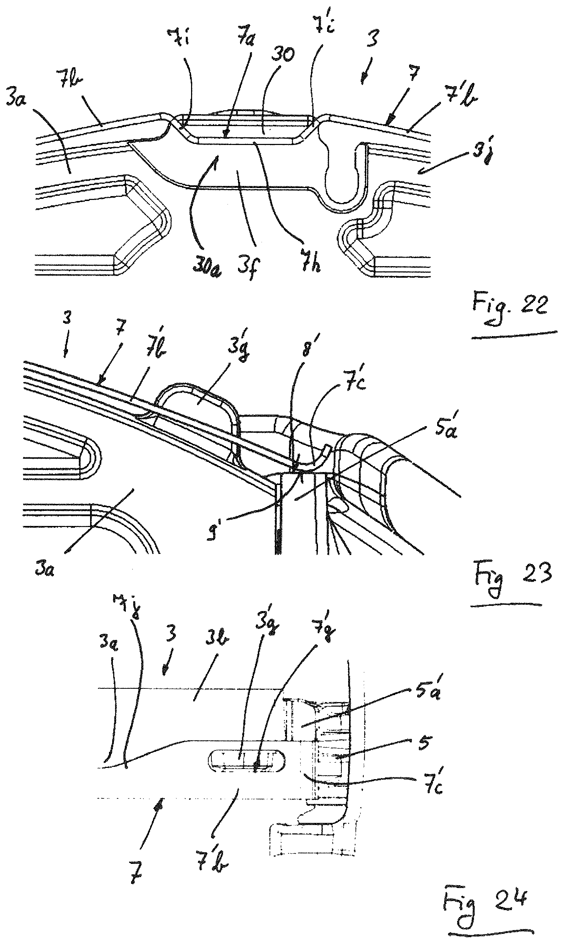

Figures 22-25 show enlarged schematic partial views of the fifth example of the disc brake according to the first embodiment of the invention, as shown in Figure 21. Thus, Figure 22 shows a central upper section of the pad rear plate 3a with a retainer for the pad retaining spring 7. Figure 23 shows one end on the inlet side of the pad retaining spring 7 like that in Figure 4, for example. Finally, Figure 24 shows the end according to Figure 23 on the inlet side in a view from the top.

In this fifth example and first embodiment, the components of the disc brake 1 are the same as those in the third example (Figure 12) except for the brake pad 3 and the pad retaining spring 7. Therefore, only the differences in the brake pad 3 and the respective pad retaining spring 7 are discussed further here.

In contrast with the first example, the pad retaining spring 7 has a central section 7a with a different design and has continuous arms 7b, 7'b, each having a pressure section 7c, 7'c. The term "continuous" as used here is understood to mean that the arms 7b, 7'b do not have any transitional sections 7d, 7'd as additional supporting lugs to support the respective arm 7b, 7'b on the top side 3d of the pad rear plate 3a (similar to Figure 2).

The central section 7a here includes a retaining section 7h, which runs in a straight line and is connected at each end to the respective arm 7b, 7'b by a connecting section 7i, 7'i in such a way that the retaining section 7h is bent with respect to the pad rear plate 3a toward the bottom.

In its retaining section 7h and the two connecting sections 7i, 7'l, the central section 7a cooperates with the fastening section 3f of the pad rear plate 3a. In doing so, the fastening section 3f, on the one hand, forms a fixation of the central section 7a and thus of the pad retaining spring 7 connected to it to prevent lateral slippage in the direction of the axis of rotation 2a of the brake disc, in other words, to prevent slippage from the top side 3d of the pad rear plate 3a in the direction of the friction lining 3b.

On the other hand, the fastening section 3f with a lug 30 forms another fixation of the central section 7a and thus of the pad retaining spring 7 connected to it, facing in the radial direction away from the top side 3d of the pad rear plate 3a (Figure 22).

The fastening section 3f protrudes from the top side 3d of the pad rear plate 3a. The lug 30 is mounted on the upper edge of the fastening section 3f and extends, on one hand, from the top side 3d protruding in the longitudinal direction of the fastening section 3f. On the other hand, the lug 30 also protrudes in the direction of the axis of rotation 2a of the brake disc toward the actuating side 3j. In other words, it forms a protrusion.

The lug 30 is created by producing a contour of a contact surface 30a, for example, beneath the lug 30 on the fastening section 3f by machining, for example, milling or grinding. Other production options are of course also conceivable such as, for example, by an additional component.

The central section 7a of the pad retaining spring 7 is in contact with the retaining surface 30a at one side edge of the retaining section 7h and side edges of the connecting sections 7i, 7'i, wherein the side edges and the top sides of the inclined connecting sections 7i, 7'i are in contact with the lower side and/or ends of the lower side of the lug 30.

When the brake pad 3 is installed, the pad retaining spring 7 is then supported on the pad carrier horns 5a, 5'a with its pressure sections 7c, 7'c and pulls the brake pad 3 in the radial direction upward/outward by the interaction of the central section 7a with the lug 30. The pad rear plate 3a of the brake pad 3 here is pulled into contact with the undercut surfaces 14, 14' of the protrusions 3c, 3'c on the undercut surfaces 13, 13' on the bottom sides of the lugs 5c, 5'c of the brake carrier horns 5a, 5'a with no play, as described above.

The length of the central section 7a corresponds approximately to the length of the top side of the fastening section 3f.

In contrast with the third example, the arms 7b, 7'b extend from each side of the fastening section 3f of the pad rear plate 3a over their top side 3d up to their respective end and beyond.

In the region of its free end, each arm 7b, 7'b is provided with a slot 7g, 7'g. The slots 7g, 7'g each serve to receive a guide protrusion 3g, 3'g. The pad retaining spring 7 is secured against twisting by the guide protrusions 3g, 3'd of the pad rear plate 3a accommodated in the slots 7g, 7'g. In other words, the pad retaining spring 7 cannot rotate about a vertical axis in the region of its central section 7a around the fastening section 3f of the pad rear plate 3a or around its imaginary longitudinal axis.

The respective end region with the slots 7g, 7'g of the pad retaining spring 7 in front of the respective pressure section 7c, 7'c is widened toward the friction lining 3b. This widened area extends up to the respective end of the pressure sections 7c, 7'c. The slots 7g, 7'g are thus no longer located centrally in an imaginary midline of the pad retaining spring 7 in this region.

Furthermore, this width of each arm 7b, 7'b of the pad retaining spring 7 is reduced in the direction of the central section 7a, wherein a recess 7j is provided on the side of the friction lining 3b. This results in a reduction in the width of the pad retaining spring 7 between the slots 7g and 7'g, at least in the central section 7a.

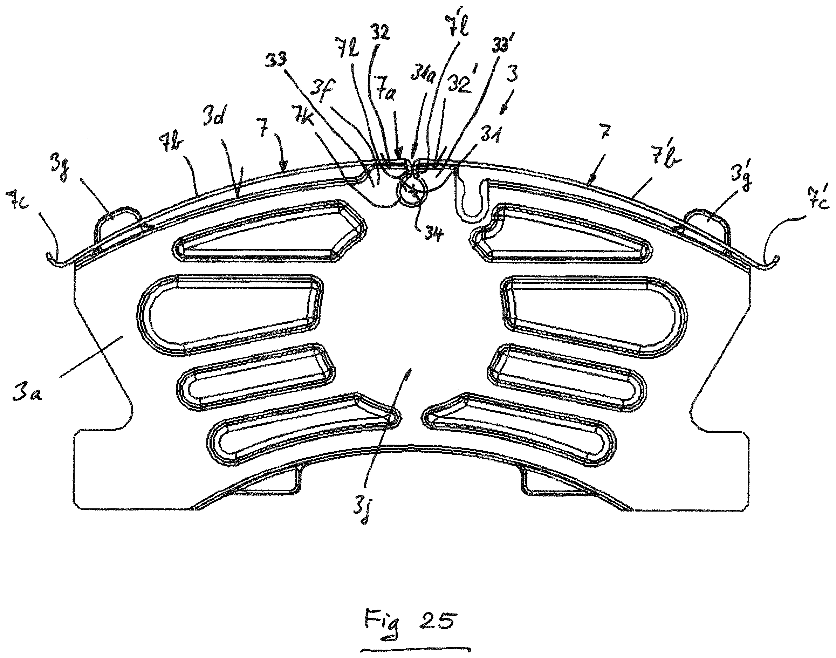

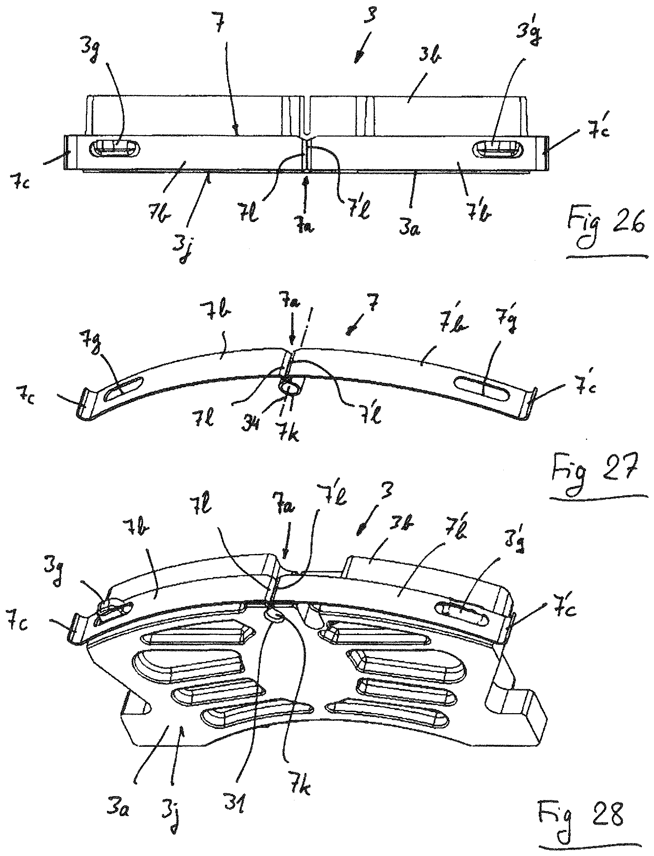

Figure 25 shows a schematic partial view of a sixth example and a second embodiment of the disc brake 1 according to the invention. Figure 26 shows a schematic top view of a brake pad 3 of the sixth example, as shown in Figure 25. Figure 27 shows a schematic perspective view of a pad retaining spring 7 of the brake pad 3 according to the invention, as shown in Figures 25 and 26; and Figure 28 shows a schematic perspective view of the brake pad 3 according to the invention, as shown in Figures 25 and Fig. 26.

The brake pad 3 differs from that of the fifth example and the first embodiment in the design of the fastening section 3f, which here has a retaining opening 31 with a slot 31a.

The fastening section 3f protrudes away from the top side 3d of the pad rear plate 3a. The retaining opening 31 here is a through-opening with a central axis 34 extending in parallel to the axis of rotation 2a of the brake disc. Instead of a circular cross section as the through-opening, the retaining opening 31 may also have a different cross section, such as, for example, a triangular or polygonal cross section. It is also conceivable for the retaining opening 31 to be shaped into the material of the pad rear plate 3a only from one side, for example, the actuating side 3j, and to form a blind hole without a continuous retaining opening 31 that goes all the way through to the other side of the friction lining 3b. Then the slot 31 can also be shaped from the same side of the pad rear plate 3a.

The slot 31a runs from the top side 32, 32' of the fastening section 3f in the radial direction from the top side 32, 32' up to the retaining opening 31 and then opens in the retaining opening 31 at its lower end. The retaining opening 31 and the slot 31a divide the fastening section 3f into two subsections 33, 33' with the respective top side 32, 32'.

The pad retaining spring 7 of the second embodiment differs from the pad retaining spring 7 of the first embodiment in that it has a constant width over the total length of top side 3d of the pad rear plate 3a and by a middle section 7a of a different design.

The pad retaining spring 7 thus protrudes in the direction of the friction lining 3b over the pad rear plate 3a. Therefore, assembly of the brake pad 3 can be simplified. The brake pad 3 on the clamping side is inserted between a pressure piece of a clamping device, which is arranged in the clamping section 6a of the brake caliper 6, and one of the brake carrier horns 5a, 5'a on the clamping side (Figure 1). Due to the protrusion of the pad retaining spring 7 beyond the pad rear plate 3a, the pad retaining spring 7 rests first on the brake carrier horn 5a, 5'a and is prestressed by pressing on the brake pad 3, and the brake pad 3 is inserted into the brake carrier 5.

The central section 7a of the pad retaining spring 7 here includes a retaining section 7k and two connecting sections 7l, 7'l.

The retaining section 7k has a circular cross section with a central axis 34, which runs parallel to the axis of rotation 2a of the brake disc and is designed like a pipe clamp with two connecting sections 7l. The connecting sections 7l, 7'l are each connected at one end to a respective free end of the circular retaining section 7k and extend straight and in parallel to one another radially upward. The free open ends of the connecting sections 7l are each connected to one arm 7b, 7'b of the pad retaining spring 7. These connecting locations may be provided with a small radius or a chamfer by folding or bending. In one embodiment, the pad retaining spring 7 is designed in one piece as a punched/bending part with the central section 7a, the arms 7b, 7'b and the pressure sections 7c, 7'c, wherein the circular retaining section 7k is created by rolling/bending.

The shape of the retaining section 7k corresponds to the shape of the retaining opening 31. The pad retaining spring 7 is mounted on the brake pad 3 in such a way that the retaining section 7k of the pad retaining spring 7 is accommodated in the retaining opening 31 of the pad rear plate 3a, wherein the connecting sections 31a are arranged side by side next to one another in the slot 31a. The two arms 7b, 7'b of the pad retaining spring 7 then rest on the relatively short sections of the top side 32, 32' of the subsections 33, 33' of the fastening section 3f and extend above the top side 3d of the pad rear plate 3a of the brake pad 3 on the clamping side to beyond the ends of the pad rear plate 3a, as already described above.

The retaining section 7k accommodated in the retaining opening 31 of the pad rear plate 3a cooperates with the retaining opening 31 in a form-fitting manner, such that the pad rear plate 3a and thus the brake pad 3 are pulled upward, as already explained above, by the pressure sections 7c, 7'c resting on the brake carrier horns 5a, 5'a.

Due to the spring force of the retaining section 7k, the latter is pressed against the wall of the retaining opening. Such a form-fitting connection can also be created with other cross sections like those described above. The subsections 33, 33' form opposing lugs that are separated by the slot 31a and the retaining opening 31 beneath it and, due to their shape, contribute to the form-fitting connection between the retaining section 7k of the pad retaining spring 7 and the pad rear plate 3a of the brake pad 3.

A simple fastening of the pad retaining spring 7 on the brake pad 3 is formed in this way and is also simple to install.

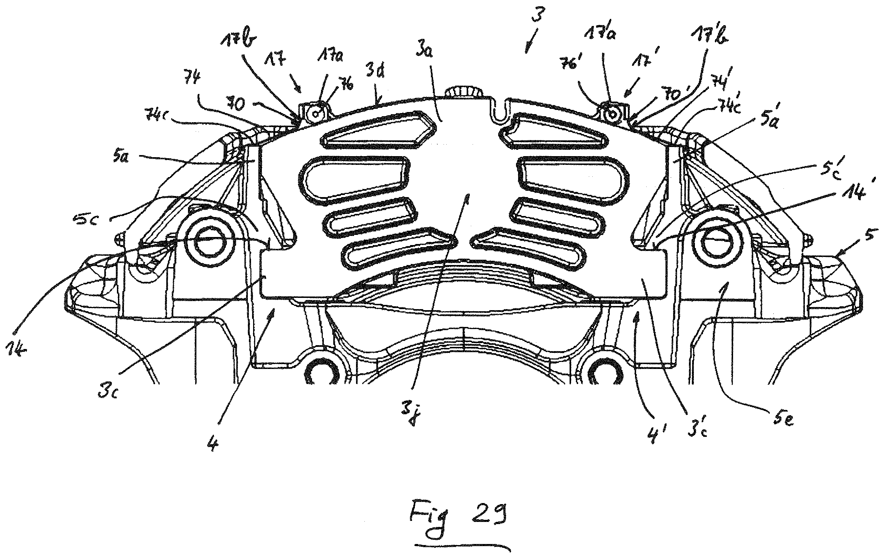

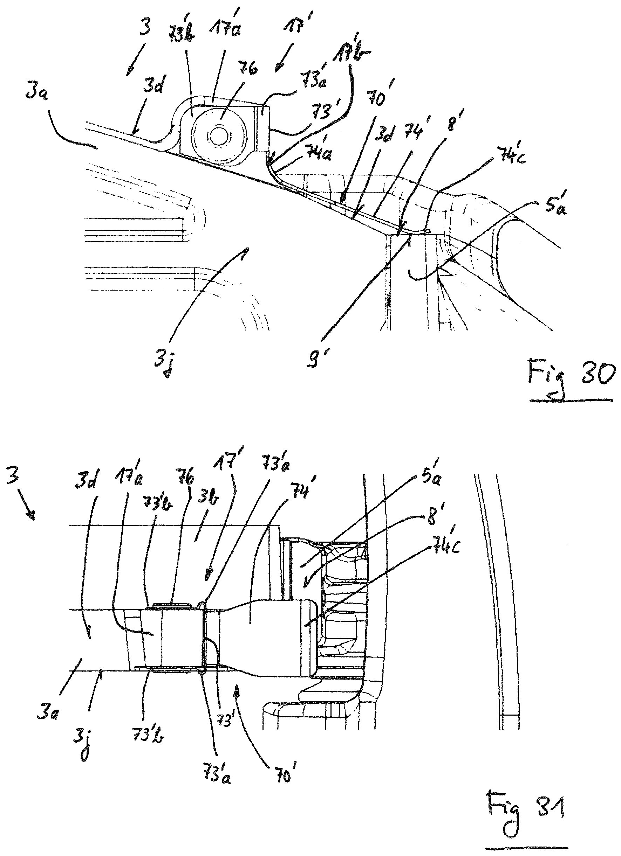

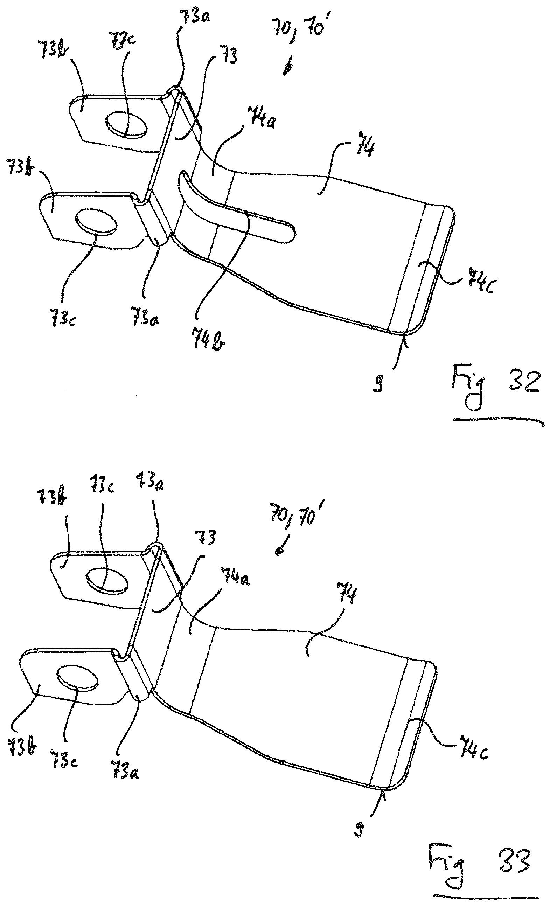

Figure 29 shows a schematic partial view of a seventh example and a third embodiment of the disc brake 1 according to the invention. Figures 30 and 31 show enlarged schematic partial views of the third embodiment of the disc brake according to the invention, as shown in Figure 29, where Figure 30 shows a partial view of the region of the pad rear plate 3a on the inlet side with the respective brake carrier horn 5a, and Figure 31 shows a top view of the view according to Figure 30. Figures 32 and 33 show schematic perspective views of the pad retaining springs of the third embodiment of the disc brake according to the invention, as shown in Figure 29.

In this third embodiment, the components of the disc brake 1 are the same as those in the second example (Figures 8, Fig. 9) except for the brake pad 3. Therefore, only the differences in the brake pad 3 are again discussed in the remaining description.

The protrusions 17a, 17'a are plate-shaped, protrude upward from the top side 3d of the pad rear plate 3a and each form a retainer for a pad retaining springs 70, 70'. In contrast with the second example, the pad retaining springs 70, 70' here are formed in part as a hood, as will be explained in greater detail below.

Each protrusion 17a, 17'a is arranged with an offset in a longitudinal line from the center of the pad rear plate at a distance from each end of the pad rear plate 3a facing the respective brake carrier horn 5a, 5'a, such that this distance here corresponds approximately to the thickness of the pad rear plate 3a. However, this distance may also be greater than the thickness of the pad rear plate 3a, for example. The side of each protrusion 17a, 17'a facing the respective brake carrier horn 5a, 5'a has a contact surface 17b, 17'b, which is designed as a hollow throat.

The one rear surface of each protrusion 17a, 17'a facing the clamping side ZS is flush with the rear surface of the pad rear plate 3a with the friction lining 3b facing the clamping side ZS. However, in another example, which is not shown here, it may be necessary to have a shoulder on the rear surface of one or each protrusion 17a, 17'a facing the clamping side ZS if the surface of this rear surface or these surfaces of the unmachined part does not meet the requirements. The other rear surface of each protrusion 17a, 17'a facing the actuating side 3j, however, is spaced a certain distance apart from the actuating side 3j. This certain distance here corresponds approximately to twice the thickness of a fastening strap 73b, 73'b of the pad retaining spring 70, 70'. This distance may of course also be different, wherein the shoulder may be varied in depth. This shoulder may be necessary to obtain a clean contact surface and to be able to use the same pad retaining spring 70, 70' for both right and left.

A retaining element 76, 76' is mounted at the center of each protrusion 17a, 17'a. These retaining elements 76, 76' include rivets and bolts, for example, with which the respective pad retaining spring 70, 70' is mounted on the respective protrusion 17a, 17'a in a fixed and form-fitting manner by means of fastening straps 73b, 73'b.

Each pad retaining spring 70, 70' comprises a base plate 73, 73', two fastening straps 73b, 73'b and a spring arm 74, 74' each with a pressure section 74c, 74'c.

The pad retaining spring 70 on the outlet side is described below. The design of the pad retaining spring 70' on the inlet side is embodied in mirror image here.

The base plate 73 is designed as an elongated rectangle having a length approximately corresponding to the width of the protrusion 17 in the direction of the axis of rotation 2a of the brake disc. A fastening strap 73b is mounted on the short sides of the base plate 73 by means of a curved connecting section 73a. The fastening straps 73b extend approximately at a right angle to the base plate toward one side (to the left in Figures 32-33) and run parallel to one another. Furthermore, each fastening strap 73b has an opening 73c through which the fastening element 76 is passed.

The base plate 73 here is arranged in the installed state of the pad retaining spring 70, 70', so that the base plate 73 lies in a plane, which runs approximately perpendicular to the undercut surface 14, 14' of the pad rear plate 3a in the direction of the axis of rotation 2a of the brake disc. bottom side of the connecting section 74a rests on the contact surface 17b. The bottom side of the spring arm 74 here rests on the top side 3d of the pad rear plate 3a from the contact surface 17b to the end of the top side 3d. This support of the pad retaining spring 70 is made possible by a prestressed fastening of the pad retaining spring 70 on the protrusion 17a.

The spring arm 74 is mounted on the longitudinal side of the base plate 73 arranged at the bottom in Figures 32-33 by a connecting section 74a. The connecting section 74a has a convex curvature toward the right side, such that its curvature communicates with the curvature of the contact surface 17b of the protrusion 17a, designed as a hollow groove. The connecting section 74a develops into the spring arm 74 with a widening effect. The pressure section 74c is mounted at the right end of the spring arm 74a. The bottom side of the pressure section 74c has the contact section 9, which rests on the supporting section 8 of the respective brake carrier horn 5a in the installed state of the brake pad 3.

In the uninstalled state of the brake pad 3, the bottom side of the connecting section 74a rests on the contact surface 17b. The bottom side of the spring arm 74 here rests on the top side 3d of the pad rear plate 3a from the contact surface 17b to the end of the top side 3d. This support of the pad retaining spring 70 is made possible by a prestressed fastening of the pad retaining spring 70 on the protrusion 17a.

To obtain the spring forces of the pad retaining springs 70, 70' required for the respective application case, the pad retaining springs 70, 70' can be provided with a recess as needed. This is shown in Figure 32, where the recess is implemented as a slot 74b.

The embodiment of the pad retaining spring 70, 70' shown in Figure 32 has the slot 74b, which extends through the connecting section 74a by approximately one-third into the base plate 73 in an imaginary longitudinal direction of the spring arm 74 beginning in its left third facing toward the connecting section 74a.

Variants (not shown) are additionally equipped with reinforcing beads/ribs here. Reinforcements without the slot 74b may also be provided. A plurality of slots 74b may of course also be arranged side by side and/or in different positions.

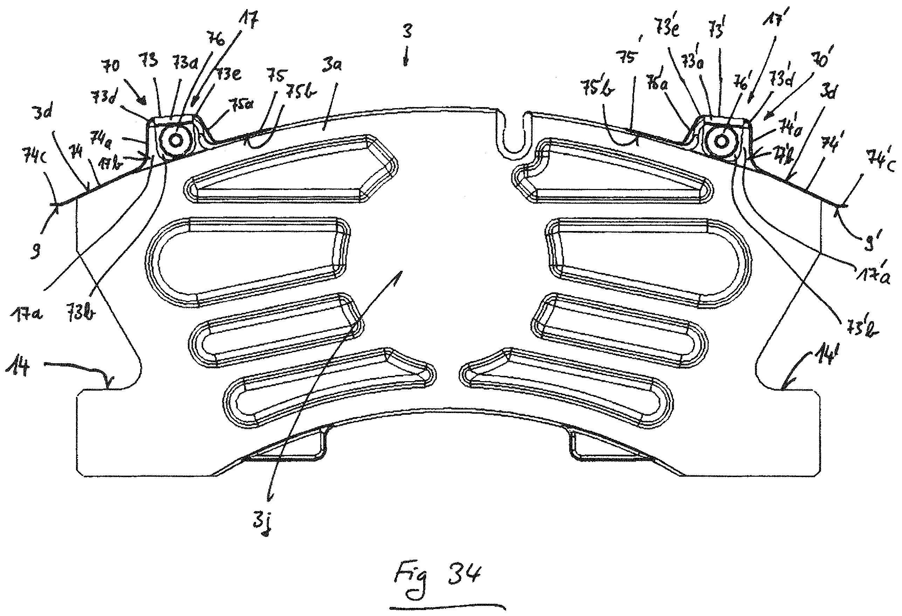

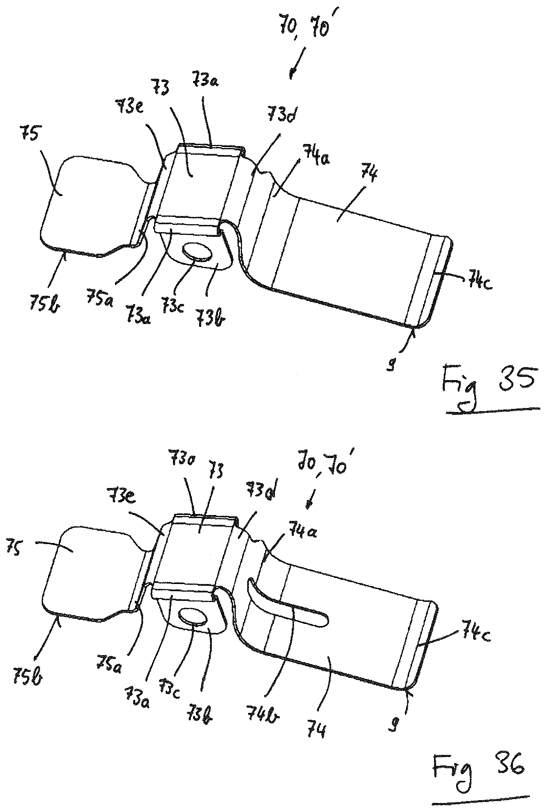

Figure 34 shows a schematic view of a brake pad 3 of a variant of the third embodiment of the disc brake 1 according to the invention, as shown in Figure 29. Schematic perspective views of pad retaining springs 70, 70' of the variant of the third embodiment according to Figure 34 are shown in Figures 35-36.

In contrast with the third embodiment, the pad retaining springs 70, 70', on the one hand, are designed in the form of hoods, and, on the other hand, are designed with a supporting arm 75, 75'. The hood shape is understood to mean that the base plate 73, 73' here is arranged in the installed state of the pad retaining spring 70, 70', so that the base plate 73, 73' lies in a plane which runs approximately parallel to the undercut surface 14, 14' of the pad rear plate 3a and is arranged above the protrusion 17a, 17'a.

On the short sides of the base plate 73, the fastening straps 73b are arranged so they are rotated by 90° counterclockwise with respect to the base plate 73 by the curved connecting sections 73a, as in the third embodiment according to Figure 29, except that they are rotated by 90° counterclockwise with respect to the base plate 73. Accordingly, the spring arm 74 is designed so that it is lengthened with the connecting section 74a and is mounted on the base plate 73 by a curved connecting section 73d. The connecting section 74a and the connecting section 73d form a joint S-shaped connecting section, wherein the connecting section 74a communicates with the shape of the contact surface 17b.

The supporting section 75 is mounted on the other long side of the base plate 73 by a curved connecting section 73e and another oppositely curved connecting section 75a. The curved connecting sections 73e and 75a together form an S-shaped connecting section. The supporting arm 75 is designed in the form of a plate and has, on its bottom side, a supporting section 75b, which in the installed state of the pad retaining spring 70, 70' rests on the top side 3d of the pad rear plate 3a.

Figure 36 shows another variant of the pad retaining spring 70 with a slot 74b, as already described in conjunction with Figure 32.

The above description of the pad retaining spring 70 on the outlet side of the variant according to Figure 34 is naturally also applicable to the pad retaining spring 70' on the inlet side accordingly.

The respective supporting arm 75, 75' in this way forms a support but also a hindrance of a rotational movement of the respect pad retaining spring 70, 70' in the installed state of the pad retaining springs 70, 70'.

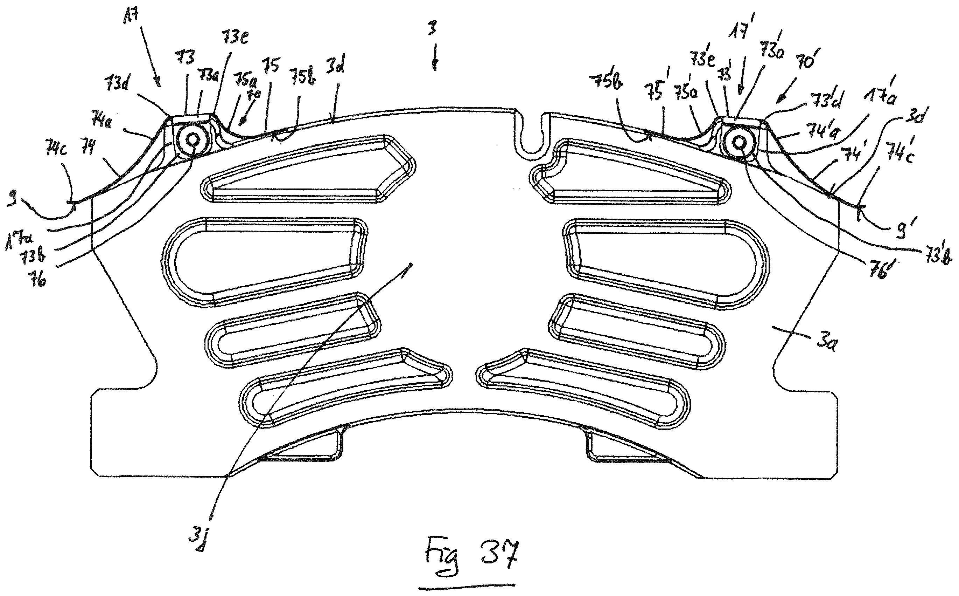

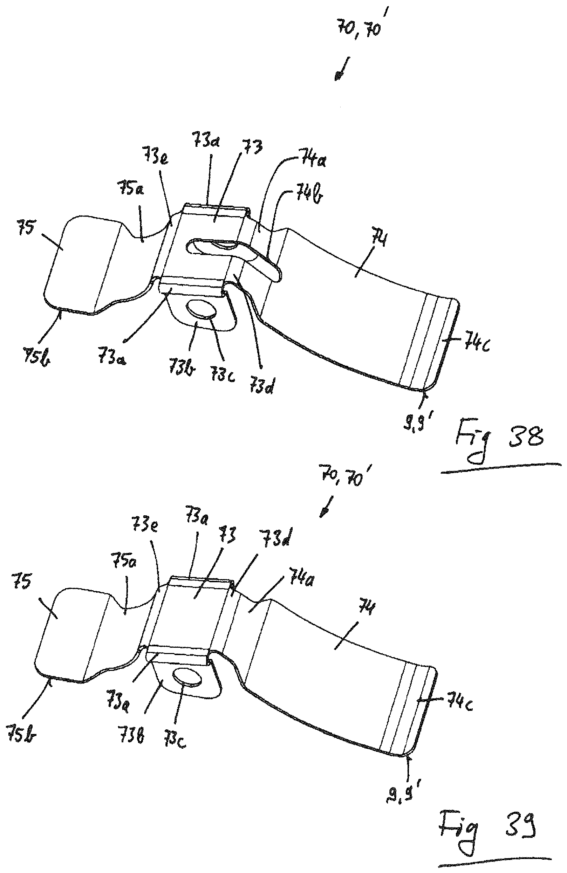

Figure 37 shows a schematic view of a brake pad on of another example being a variant of the example, as shown in Figure 29. Figures 38-39 show schematic perspective views of pad retaining springs 70, 70' of the additional example according to Figure 37.

In this additional variant, the difference in comparison with the variant according to Figure 34 is that the shape of the spring arm 74, of the connecting section 74a and 73d runs in a stretched form, i.e., the radii of curvature of the respective curves are larger, wherein the connecting section 74a does not communicate with the shape of the contact surface 17b, 17'b and also does not rest on the latter in the installed state of the brake pad 3.

The variant of the pad retaining spring 70 according to Figure 38 shows a slot 74b, which extends centrally in the longitudinal axis through the connecting sections 74a and 73b to more than approximately three-fourths of the base plate 73. This is of course also true of the pad retaining spring 70' on the inlet side.

Statements about the slots 74b, 74'b, including the reinforcing beads/ribs (not shown) are naturally also applicable here.

The pad retaining springs 70, 70' of the third embodiment, including the variants thereof, are produced from spring steel.

The invention is not restricted by the embodiments described above but instead can be modified within the scope of the attached claims.

Thus, for example, it is conceivable for the brake carrier 5 to be implementable with a so-called radial groove 21 for simple installation of the brake pad 3. The groove 21 extends in the direction of the respective brake carrier horn 5a, 5'a between one side of the respective lug 5c, 5'c and one edge of the respective brake carrier horn 5a, 5'a. This is illustrated in Figure 6.

The foregoing disclosure has been set forth merely to illustrate the invention and is not intended to be limiting. Modifications of the disclosed embodiments should be construed to include everything within the scope of the appended claims.

### List of Reference Numerals

- 1: disc brake
- 2: brake disc
- 2a: axis of rotation of the brake disc
- 3: brake pad
- 3a: pad rear plate
- 3b: friction lining
- 3c, 3'c: protrusion
- 3d: top side
- 3e, 3'e: corner section
- 3f: fastening section
- 3g, 3'g: guide protrusion
- 3h, 3'h: recess
- 3i, 3'i: chamfer
- 3j: actuating side
- 4,4': undercut
- 5: brake carrier
- 5a, 5'a; 5b, 5'b: brake carrier horn
- 5c, 5'c: lug
- 5d: strut
- 5e: fastening side
- 5f: strut
- 6: brake caliper
- 6a: clamping section
- 6b: reaction section
- 6c, 6'c: connecting section
- 7: pad retaining spring
- 7a: central section
- 7b, 7'b: arm
- 7c, 7'c: pressure section
- 7d, 7'd: transitional section
- 7e, 7'e: intermediate section
- 7f, 7'f; 7g, 7'g: slot
- 7h: retaining section
- 7i, 7'i: connecting section
- 7j: taper
- 7k: retaining section
- 7l, 7'l: connecting section
- 8, 8': supporting section
- 9, 9': contact section
- 10: main direction of rotation
- 10a: pivot point
- 11, 12: force
- 11a, 12a: lever arm
- 13, 13': undercut surface
- 14, 14': undercut surface
- 15, 16: pad slot
- 17, 17': spring retainer
- 17a, 17'a: protrusion
- 17b, 17'b: contact surface
- 18, 18': retaining element
- 19, 19': opening
- 20, 20': fastening element
- 20a: plate
- 20b, 20c: side wall
- 20d: transverse section
- 20e: connection
- 21: groove
- 30: retaining lug
- 30a: contact surface
- 31: retaining opening
- 31a: slot
- 32, 32': top side
- 33, 33': subsection
- 34: central axis
- 35, 35': side surface
- 70, 70': pad retaining spring
- 70a: central section
- 70b, 70c: transitional section
- 71, 71': pressure section
- 72, 72': bearing section
- 72a: support section
- 73, 73': base plate
- 73a, 73'a: connecting section
- 73b, 73'b: fastening strap
- 73c: opening
- 73d, 73'd: connecting section
- 73e, 73'e: connecting section
- 74, 74': spring arm
- 74a, 74'a: connecting section
- 74b: slot
- 74c, 74'c: pressure section
- 75, 75': supporting arm
- 75a, 75'a: connecting section
- 75b, 75'b: supporting section
- 76, 76': fastening element
- RS: rear side
- ZS: clamping side

## Claims

1. A disc brake (1) for a vehicle, comprising:
a brake disc (2);
at least two brake pads (3), the at least two brake pads (3) including a clamping side brake pad (3) located on a clamping side of the brake disc (2) and a rear side brake pad located on a rear side of the brake disc (2);
a brake carrier (5) configured to accommodate the at least two brake pads (3) in respective clamping side and rear side brake pad slots (15, 16), the brake carrier (5) having at least one brake horn (5a, 5'a, 5b, 5'b) at a lateral side of at least the clamping side brake pad slot (15);
a brake caliper (6) configured to straddle the brake disc (2) when in an installed position on the brake mount with a clamping side and arranged to apply the clamping side brake pad (3) against the clamping side of the brake disc (2) and a rear side arranged to apply the rear side brake pad against the rear side of the brake disc (2),
wherein the clamping side brake pad (3)
is located in form-fitting engagement with the clamping side pad slot (15) with respect to a radial direction perpendicular to a rotation axis of the brake disc (2),
includes at least one pad retaining spring (7) configured to be supported on the at least one clamping side brake carrier horn (5a, 5'a) and to exert a radially outward tensile force on the clamping side brake pad (3), wherein
the form-fitting engagement of the clamping side brake pad (3) with the clamping side pad slot (15) includes form-fitting engagement of a pad rear plate (3a) of the clamping side brake pad (3) with a contour of the at least one clamping side brake carrier horn (5a, 5'a),
wherein
the contour of the at least one clamping side brake carrier horn (5a, 5'a) includes an undercut surface configured to engage an undercut surface of an opposing protrusion (3c, 3'c) of the pad rear plate (3a) without play when the clamping side brake pad (3) is subject to the radially outward tensile force exerted by the at least one pad retaining spring (7),
wherein the at least one pad retaining spring (7) is mounted on the pad rear plate (3a), wherein
the at least one pad retaining spring (7) is located on a top side of the pad rear plate (3a),
**characterized in that**
the pad retaining spring (7) has a central section (7a) and continuous arms (7b, 7'b), each having a pressure section (7c, 7'c),
wherein the central section (7a) includes a retaining section (7h), which runs in a straight line and is connected at each end to the respective arm (7b, 7`b) by a connecting section (7i, 7'i) in such a way that the retaining section (7h) is bent with respect to the pad rear plate (3a) toward the bottom,
wherein in its retaining section (7h) and the two connecting sections (7i, 7'i), the central section (7a) cooperates with a fastening section (3f) of the pad rear plate (3a),
wherein the fastening section (3f) protrudes from the top side (3d) of the pad rear plate (3a) and has a lug (30) mounted on the upper edge of the fastening section (3f), which lug (30) extends from the top side (3d) protruding in the longitudinal direction of the fastening section (3f) and protrudes in the direction of the axis of rotation (2a) of the brake disc toward the actuating side (3j),
wherein the central section (7a) of the pad retaining spring (7) is in contact with a retaining surface (30a) of the lug (30) at one side edge of the retaining section (7h) and side edges of the connecting sections (7i, 7'i), wherein the side edges and the top sides of the inclined connecting sections (7i,7'i) are in contact with the lower side and/or ends of the lower side of the lug (30).

2. A disc brake (1) for a vehicle, comprising:
a brake disc (2);
at least two brake pads (3), the at least two brake pads (3) including a clamping side brake pad (3) located on a clamping side of the brake disc (2) and a rear side brake pad located on a rear side of the brake disc (2);
a brake carrier (5) configured to accommodate the at least two brake pads (3) in respective clamping side and rear side brake pad slots (15, 16), the brake carrier (5) having at least one brake horn (5a, 5'a, 5b, 5'b) at a lateral side of at least the clamping side brake pad slot (15);
a brake caliper (6) configured to straddle the brake disc (2) when in an installed position on the brake mount with a clamping side and arranged to apply the clamping side brake pad (3) against the clamping side of the brake disc (2) and a rear side arranged to apply the rear side brake pad against the rear side of the brake disc (2),
wherein the clamping side brake pad (3)
is located in form-fitting engagement with the clamping side pad slot (15) with respect to a radial direction perpendicular to a rotation axis of the brake disc (2),
includes at least one pad retaining spring (7) configured to be supported on the at least one clamping side brake carrier horn (5a, 5'a) and to exert a radially outward tensile force on the clamping side brake pad (3), wherein
the form-fitting engagement of the clamping side brake pad (3) with the clamping side pad slot (15) includes form-fitting engagement of a pad rear plate (3a) of the clamping side brake pad (3) with a contour of the at least one clamping side brake carrier horn (5a, 5'a), wherein
the contour of the at least one clamping side brake carrier horn (5a, 5'a) includes an undercut surface configured to engage an undercut surface of an opposing protrusion (3c, 3'c) of the pad rear plate (3a) without play when the clamping side brake pad (3) is subject to the radially outward tensile force exerted by the at least one pad retaining spring (7),
wherein the at least one pad retaining spring (7) is mounted on the pad rear plate (3a), wherein
the at least one pad retaining spring (7) is located on a top side of the pad rear plate (3a),
**characterized in that**
the pad retaining spring (7) has a central section (7a) and continuous arms (7b, 7'b), each having a pressure section (7c, 7'c),
wherein the central section (7a) includes a retaining section (7k) and two connecting sections (71, 7'1),
wherein the retaining section (7k) has a circular cross section with a central axis (34), which runs parallel to the axis of rotation (2a) of the brake disc and is designed like a pipe clamp with two connecting sections (71),
wherein the connecting sections (71, 7'1) are each connected at one end to a respective free end of the circular retaining section (7k) and extend straight and in parallel to one another radially upward and free open ends of the connecting sections (71) are each connected to one arm (7b, 7'b) of the pad retaining spring (7),
wherein the shape of the retaining section (7k) corresponds to the shape of a retaining opening (31) of a fastening section (3f) protruding away from the top side (3d) of the pad rear plate (3a),
wherein the retaining opening (31) of the fastening section (3f) has a slot (31a), wherein the retaining opening (31) is a through-opening with a central axis (34) extending in parallel to the axis of rotation (2a) of the brake disc, and
wherein the pad retaining spring (7) is mounted on the brake pad (3) in such a way that the retaining section (7k) of the pad retaining spring (7) is accommodated in the retaining opening (31) of the pad rear plate (3a), wherein the connecting sections (71, 7'1) are arranged side by side next to one another in the slot (31a).

3. A disc brake (1) for a vehicle, comprising:
a brake disc (2);
at least two brake pads (3), the at least two brake pads (3) including a clamping side brake pad (3) located on a clamping side of the brake disc (2) and a rear side brake pad located on a rear side of the brake disc (2);
a brake carrier (5) configured to accommodate the at least two brake pads (3) in respective clamping side and rear side brake pad slots (15, 16), the brake carrier (5) having at least one brake horn (5a, 5'a, 5b, 5'b) at a lateral side of at least the clamping side brake pad slot (15);
a brake caliper (6) configured to straddle the brake disc (2) when in an installed position on the brake mount with a clamping side and arranged to apply the clamping side brake pad (3) against the clamping side of the brake disc (2) and a rear side arranged to apply the rear side brake pad against the rear side of the brake disc (2),
wherein the clamping side brake pad (3)
is located in form-fitting engagement with the clamping side pad slot (15) with respect to a radial direction perpendicular to a rotation axis of the brake disc (2),
includes two pad retaining springs (70) configured to be supported on the respective clamping side brake carrier horn (5a, 5'a) and to exert a radially outward tensile force on the clamping side brake pad (3), wherein
the form-fitting engagement of the clamping side brake pad (3) with the clamping side pad slot (15) includes form-fitting engagement of a pad rear plate (3a) of the clamping side brake pad (3) with a contour of the respective clamping side brake carrier horn (5a, 5'a), wherein
the contour of the respective clamping side brake carrier horn (5a, 5'a) includes an undercut surface configured to engage an undercut surface of an opposing protrusion (3c, 3'c) of the pad rear plate (3a) without play when the clamping side brake pad (3) is subject to the radially outward tensile force exerted by the at least one pad retaining spring (70),
wherein the pad retaining springs (70) are mounted on the pad rear plate (3a), wherein
the pad retaining springs (70) are located on a top side of the pad rear plate (3a) by a respective spring retainer (17, 17'), **characterized in that**
the spring retainers for the pad retaining springs (70, 70') are formed as plate-shaped protrusions (17a, 17'a) protruding upward from the top side (3d) of the pad rear plate (3a),
wherein each protrusion (17a, 17'a) is arranged with an offset in a longitudinal line from the center of the pad rear plate (3a) at a distance from each end of the pad rear plate (3a) facing the respective brake carrier horn (5a, 5'a), the side of each protrusion (1a, 17b) facing the respective brake carrier horn (5, 5a) having a contact surface (17b, 17'b) with a curvature designed as a hollow groove,
wherein each pad retaining spring (70, 70') comprises a base plate (73, 73'), two fastening straps (73b, 73'b) and a spring arm (74, 74') each with a pressure section (74c, 74'c),
wherein a retaining element (76, 76') is mounted at the center of each protrusion (17a, 17'a), with which the respective pad retaining spring (70, 70') is mounted on the respective protrusion (17a, 17'a) in a fixed and form-fitting manner by means of the fastening straps (73b, 73'b),
wherein the base plate (73) is designed as an elongated rectangle having a length approximately corresponding to the width of the protrusion (17) in the direction of the axis of rotation (2a) of the brake disc,
wherein the fastening straps (73b) are mounted on the short sides of the base plate (73) by means of a curved connecting section (73a) extending approximately at a right angle to the base plate toward one side and run parallel to one another,
wherein each fastening strap (73b) has an opening (73c) through which the retaining element (76) is passed,
wherein the respective spring arms (74) are mounted on the longitudinal side of the respective base plate (73) by a respective connecting section (74a) having a respective convex curvature toward the respective contact surface (17b, 17'b) of the respective protrusion (17a, 17b), such that its respective curvature communicates with the respective curvature of the respective contact surface (17b, 17'b) of the respective protrusion (17a), and developing into the respective spring arm (74) with a widening effect,
wherein the pressure section (74c) of the respective spring arm (74) is mounted at an outer end of the spring arm (74a), the bottom side of the pressure section (74c) having a contact section (9), which rests on the supporting section (8) of the respective brake carrier horn (5a) in the installed state of the brake pad (3).

## Patentansprüche

1. Scheibenbremse (1) für ein Fahrzeug, umfassend:
eine Bremsscheibe (2);
mindestens zwei Bremsbeläge (3), wobei die mindestens zwei Bremsbeläge (3) einen zuspannseitigen Bremsbelag (3), der sich auf einer Zuspannseite der Bremsscheibe (2) befindet, und einen rückseitigen Bremsbelag, der sich auf einer Rückseite der Bremsscheibe (2) befindet, aufweist;
einen Bremsträger (5), der dazu ausgelegt ist, die mindestens zwei Bremsbeläge (3) in jeweiligen Zuspannseiten- und
Rückseitenbremsbelagschlitzen (15, 16) aufzunehmen, wobei der Bremsträger (5) mindestens ein Bremshorn (5a, 5'a, 5b, 5'b) an einer lateralen Seite mindestens des Zuspannseitenbremsbelagschlitzes (15) aufweist;
einen Bremssattel (6), der zum Überspannen der Bremsscheibe (2) in einer installierten Position am Bremshalter ausgelegt ist, mit einer Zuspannseite und angeordnet zum Anlegen des zuspannseitigen Bremsbelags (3) an die Zuspannseite der Bremsscheibe (2), und einer Rückseite, die zum Anlegen des rückseitigen Bremsbelags an die Rückseite der Bremsscheibe (2) angeordnet ist,
wobei sich der Zuspannseitenbremsbelag (3) in einem formschlüssigen Eingriff mit dem Zuspannseitenbelagschlitz (15) bezüglich einer senkrecht zu einer Drehachse der Bremsscheibe (2) verlaufenden Radialrichtung befindet, mindestens eine Belaghaltefeder (7) aufweist, die zum Abstützen auf dem mindestens einen zuspannseitigen Bremsträgerhorn (5a, 5'a) und zum Ausüben einer radial nach außen verlaufenden Zugkraft auf den zuspannseitigen Bremsbelag (3) ausgelegt ist, wobei
der formschlüssige Eingriff des zuspannseitigen Bremsbelags (3) mit dem Zuspannseitenbelagschlitz (15) einen formschlüssigen Eingriff einer Belagrückenplatte (3a) des zuspannseitigen Bremsbelags (3) mit einer Kontur des mindestens einen zuspannseitigen Bremsträgerhorns (5a, 5'a) beinhaltet, wobei
die Kontur des mindestens einen zuspannseitigen Bremsträgerhorns (5a, 5'a) eine hinterschnittene Fläche aufweist, die dazu ausgelegt ist, eine hinterschnittene Fläche eines gegenüberliegenden Vorsprungs (3c, 3'c) der Belagrückenplatte (3a) ohne Spiel in Eingriff zu nehmen, wenn der zuspannseitige Bremsbelag (3) der durch die mindestens eine Belaghaltefeder (7) ausgeübten radial nach außen verlaufenden Zugkraft ausgesetzt ist,
wobei die mindestens eine Belaghaltefeder (7) auf der Belagrückenplatte (3a) angebracht ist, wobei
sich die mindestens eine Belaghaltefeder (7) auf einer Oberseite der Belagrückenplatte (3a) befindet,
**dadurch gekennzeichnet, dass**
die Belaghaltefeder (7) einen mittleren Abschnitt (7a) und durchgehende Arme (7b, 7'b) aufweist, die jeweils einen Druckabschnitt (7c, 7'c) haben,
wobei der mittlere Abschnitt (7a) einen Halteabschnitt (7h) aufweist, der in einer geraden Linie verläuft und an jedem Ende durch einen Verbindungsabschnitt (7i, 7'i) so mit dem jeweiligen Arm (7b, 7'b) verbunden ist, dass der Halteabschnitt (7h) bezüglich der Belagrückenplatte (3a) nach unten gebogen wird,
wobei der mittlere Abschnitt (7a) in seinem Halteabschnitt (7h) und den zwei Verbindungsabschnitten (7i, 7'i) mit einem Befestigungsabschnitt (3f) der Belagrückenplatte (3a) zusammenwirkt,
wobei der Befestigungsabschnitt (3f) von der Oberseite (3d) der Belagrückenplatte (3a) hervorsteht und eine am oberen Rand des Befestigungsabschnitts (3f) angebrachte Nase (30) aufweist, wobei sich die Nase (30), in Längsrichtung des Befestigungsabschnitts (3f) hervorstehend, von der Oberseite (3d) erstreckt und in Richtung der Drehachse (2a) der Bremsscheibe zur Betätigungsseite (3j) hervorsteht,
wobei der mittlere Abschnitt (7a) der Belaghaltefeder (7) an einem Seitenrand des Halteabschnitts (7h) und Seitenrändern der Verbindungsabschnitte (7i, 7'i) mit einer Haltefläche (30a) der Nase (30) in Kontakt steht, wobei die Seitenränder und die Oberseiten der geneigten Verbindungsabschnitte (7i, 7'i) mit der Unterseite und/oder Enden der Unterseite der Nase (30) in Kontakt stehen.

2. Scheibenbremse (1) für ein Fahrzeug, umfassend:
eine Bremsscheibe (2);
mindestens zwei Bremsbeläge (3), wobei die mindestens zwei Bremsbeläge (3) einen zuspannseitigen Bremsbelag (3), der sich auf einer Zuspannseite der Bremsscheibe (2) befindet, und einen rückseitigen Bremsbelag, der sich auf einer Rückseite der Bremsscheibe (2) befindet, aufweisen;
einen Bremsträger (5), der dazu ausgelegt ist, die mindestens zwei Bremsbeläge (3) in jeweiligen Zuspannseiten- und
Rückseitenbremsbelagschlitzen (15, 16) aufzunehmen, wobei der Bremsträger (5) mindestens ein Bremshorn (5a, 5'a, 5b, 5'b) an einer lateralen Seite mindestens des Zuspannseitenbremsbelagschlitzes (15) aufweist;
einen Bremssattel (6), der zum Überspannen der Bremsscheibe (2) in einer installierten Position am Bremshalter ausgelegt ist, mit einer Zuspannseite und die zum Anlegen des zuspannseitigen Bremsbelags (3) an die Zuspannseite der Bremsscheibe (2) angeordnet ist, und einer Rückseite, die zum Anlegen des rückseitigen Bremsbelags an die Rückseite der Bremsscheibe (2) angeordnet ist,
wobei sich der Zuspannseitenbremsbelag (3)
in einem formschlüssigen Eingriff mit dem Zuspannseitenbelagschlitz (15) bezüglich einer senkrecht zu einer Drehachse der Bremsscheibe (2) verlaufenden Radialrichtung befindet,
mindestens eine Belaghaltefeder (7) aufweist, die zum Abstützen auf dem mindestens einen zuspannseitigen Bremsträgerhorn (5a, 5'a) und zum Ausüben einer radial nach außen verlaufenden Zugkraft auf den zuspannseitigen Bremsbelag (3) ausgelegt ist, wobei
der formschlüssige Eingriff des zuspannseitigen Bremsbelags (3) mit dem Zuspannseitenbelagschlitz (15) einen formschlüssigen Eingriff einer Belagrückenplatte (3a) des zuspannseitigen Bremsbelags (3) mit einer Kontur des mindestens einen zuspannseitigen Bremsträgerhorns (5a, 5'a) beinhaltet, wobei
die Kontur des mindestens einen zuspannseitigen Bremsträgerhorns (5a, 5'a) eine hinterschnittene Fläche aufweist, die dazu ausgelegt ist, eine hinterschnittene Fläche eines gegenüberliegenden Vorsprungs (3c, 3'c) der Belagrückenplatte (3a) ohne Spiel in Eingriff zu nehmen, wenn der zuspannseitige Bremsbelag (3) der durch die mindestens eine Belaghaltefeder (7) ausgeübten radial nach außen verlaufenden Zugkraft ausgesetzt ist,
wobei die mindestens eine Belaghaltefeder (7) auf der Belagrückenplatte (3a) angebracht ist, wobei
sich die mindestens eine Belaghaltefeder (7) auf einer Oberseite der Belagrückenplatte (3a) befindet,
**dadurch gekennzeichnet, dass**
die Belaghaltefeder (7) einen mittleren Abschnitt (7a) und durchgehende Arme (7b, 7'b) aufweist, die jeweils einen Druckabschnitt (7c, 7'c) haben,
wobei der mittlere Abschnitt (7a) einen Halteabschnitt (7k) und zwei Verbindungsabschnitte (7l, 7'l) aufweist,
wobei der Halteabschnitt (7k) einen kreisförmigen Querschnitt mit einer mittleren Achse (34) aufweist, die parallel zur Drehachse (2a) der Bremsscheibe verläuft und wie eine Rohrschelle mit zwei Verbindungsabschnitten (71) ausgebildet ist,
wobei die Verbindungsabschnitte (71, 7'l) jeweils an einem Ende mit einem jeweiligen freien Ende des kreisförmigen Halteabschnitts (7k) verbunden sind und sich gerade und parallel zueinander radial nach oben erstrecken und freie offene Enden der Verbindungsabschnitte (71) jeweils mit einem Arm (7b, 7'b) der Belaghaltefeder (7) verbunden sind,
wobei die Form des Halteabschnitts (7k) der Form einer Halteöffnung (31) eines Befestigungsabschnitts (3f) entspricht, der von der Oberseite (3d) der Belagrückenplatte (3a) absteht,
wobei die Halteöffnung (31) des Befestigungsabschnitts (3f) einen Schlitz (31a) aufweist, wobei die Halteöffnung (31) eine Durchgangsöffnung mit einer mittleren Achse (34) ist, die sich parallel zu der Drehachse (2a) der Bremsscheibe erstreckt, und
wobei die Belaghaltefeder (7) so an dem Bremsbelag (3) angebracht ist, dass der Halteabschnitt (7k) der Belaghaltefeder (7) in der Halteöffnung (31) der Belagrückenplatte (3a) aufgenommen ist, wobei die Verbindungsabschnitte (71, 7'l) Seite an Seite nebeneinander in dem Schlitz (31a) angeordnet sind.

3. Scheibenbremse (1) für ein Fahrzeug, umfassend:
eine Bremsscheibe (2);
mindestens zwei Bremsbeläge (3), wobei die mindestens zwei Bremsbeläge (3) einen zuspannseitigen Bremsbelag (3), der sich auf einer Zuspannseite der Bremsscheibe (2) befindet, und einen rückseitigen Bremsbelag, der sich auf einer Rückseite der Bremsscheibe (2) befindet, aufweisen;
einen Bremsträger (5), der dazu ausgelegt ist, die mindestens zwei Bremsbeläge (3) in jeweiligen Zuspannseiten- und
Rückseitenbremsbelagschlitzen (15, 16) aufzunehmen, wobei der Bremsträger (5) mindestens ein Bremshorn (5a, 5'a, 5b, 5'b) an einer lateralen Seite mindestens des Zuspannseitenbremsbelagschlitzes (15) aufweist;
einen Bremssattel (6), der zum Überspannen der Bremsscheibe (2) in einer installierten Position am Bremshalter ausgelegt ist, mit einer Zuspannseite und die zum Anlegen des zuspannseitigen Bremsbelags (3) an die Zuspannseite der Bremsscheibe (2) angeordnet ist, und einer Rückseite, die zum Anlegen des rückseitigen Bremsbelags an die Rückseite der Bremsscheibe (2) angeordnet ist,
wobei sich der Zuspannseitenbremsbelag (3)
in einem formschlüssigen Eingriff mit dem Zuspannseitenbelagschlitz (15) bezüglich einer senkrecht zu einer Drehachse der Bremsscheibe (2) verlaufenden Radialrichtung befindet,
zwei Belaghaltefedern (70) aufweist, die zum Abstützen auf dem jeweiligen zuspannseitigen Bremsträgerhorn (5a, 5'a) und zum Ausüben einer radial nach außen verlaufenden Zugkraft auf den zuspannseitigen Bremsbelag (3) ausgelegt sind, wobei
der formschlüssige Eingriff des zuspannseitigen Bremsbelags (3) mit dem Zuspannseitenbelagschlitz (15) einen formschlüssigen Eingriff einer Belagrückenplatte (3a) des zuspannseitigen Bremsbelags (3) mit einer Kontur des jeweiligen zuspannseitigen Bremsträgerhorns (5a, 5'a) beinhaltet, wobei die Kontur des jeweiligen zuspannseitigen Bremsträgerhorns (5a, 5'a) eine hinterschnittene Fläche aufweist, die dazu ausgelegt ist, eine hinterschnittene Fläche eines gegenüberliegenden Vorsprungs (3c, 3'c) der Belagrückenplatte (3a) ohne Spiel in Eingriff zu nehmen, wenn der zuspannseitige Bremsbelag (3) der durch die mindestens eine Belaghaltefeder (70) ausgeübten radial nach außen verlaufenden Zugkraft ausgesetzt ist,
wobei die Belaghaltefedern (70) auf der Belagrückenplatte (3a) angebracht sind, wobei
die Belaghaltefedern (70) durch einen jeweiligen Federhalter (17, 17') auf einer Oberseite der Belagrückenplatte (3a) positioniert sind, **dadurch gekennzeichnet, dass**
die Federhalter für die Belaghaltefedern (70, 70') als plattenförmige Vorsprünge (17a, 17'a) ausgebildet sind, die von der Oberseite (3d) der Belagrückenplatte (3a) nach oben hervorstehen,
wobei jeder Vorsprung (17a, 17'a) mit einem Versatz in einer Längslinie von der Mitte der Belagrückenplatte (3a) in einem Abstand von jedem Ende der Belagrückenplatte (3a), das dem jeweiligen Bremsträgerhorn (5a, 5'a) zugewandt ist, angeordnet ist, wobei die Seite jedes Vorsprungs (1a, 17b), die dem jeweiligen Bremsträgerhorn (5, 5a) zugewandt ist, eine Kontaktfläche (17b, 17'b) mit einer als Hohlnut ausgebildeten Krümmung aufweist,
wobei jede Belaghaltefeder (70, 70') eine Grundplatte (73, 73'), zwei Befestigungsbänder (73b, 73'b) und einen Federarm (74, 74') mit jeweils einem Druckabschnitt (74c, 74'c) umfasst,
wobei ein Halteelement (76, 76') in der Mitte jedes Vorsprungs (17a, 17'a) angebracht ist, mit dem die jeweilige Belaghaltefeder (70, 70') mittels der Befestigungsbänder (73b, 73b) fest und formschlüssig auf dem jeweiligen Vorsprung (17a, 17'a) fixiert ist,
wobei die Grundplatte (73) als ein längliches Rechteck mit einer Länge ausgebildet ist, die etwa der Breite des Vorsprungs (17) in Richtung der Drehachse (2a) der Bremsscheibe entspricht,
wobei die Befestigungsbänder (73b) mittels eines gekrümmten Verbindungsabschnitts (73a), der sich etwa rechtwinklig zu der Grundplatte zu einer Seite hin erstreckt, an den kurzen Seiten der Grundplatte (73) angebracht sind und parallel zueinander verlaufen,
wobei jedes Befestigungsband (73b) eine Öffnung (73c) aufweist, durch die das Halteelement (76) geführt wird,
wobei die jeweiligen Federarme (74) an der Längsseite der jeweiligen Grundplatte (73) durch einen jeweiligen Verbindungsabschnitt (74a) mit einer jeweiligen konvexen Krümmung in Richtung der jeweiligen Kontaktfläche (17b, 17'b) des jeweiligen Vorsprungs (17a, 17b) angebracht sind, sodass sich seine jeweilige Krümmung mit der jeweiligen Krümmung der jeweiligen Kontaktfläche (17b, 17'b) des jeweiligen Vorsprungs (17a) verbindet und mit einer Erweiterungswirkung in den jeweiligen Federarm (74) übergeht,
wobei der Druckabschnitt (74c) des jeweiligen Federarms (74) an einem äußeren Ende des Federarms (74a) angebracht ist, wobei die Unterseite des Druckabschnitts (74c) einen Kontaktabschnitt (9) aufweist, der im eingebauten Zustand des Bremsbelags (3) auf dem Stützabschnitt (8) des jeweiligen Bremsträgerhorns (5a) aufliegt.

## Revendications

1. Frein (1) à disque d'un véhicule, comprenant :
un disque (2) de frein ;
au moins deux plaquettes (3) de frein, les au moins deux plaquettes (3) de frein comprenant une plaquette (3) de frein du côté du serrage placée du côté du serrage du disque (2) de frein et une plaquette de frein du côté arrière placée du côté arrière du disque (2) de frein ;
un support (5) de frein configuré pour loger les au moins deux plaquettes (3) de frein dans des fentes (15, 16) respectives de plaquette de frein du côté du serrage et du côté arrière, le support (5) de frein ayant au moins une corne (5a, 5'a, 5b, 5'b) de frein d'un côté latéral d'au moins la fente (15) de plaquette de frein du côté du serrage ;
un étrier (6) de frein configuré pour chevaucher le disque (2) de frein lorsqu'il est dans une position montée sur le montage de frein avec un côté de serrage et agencé pour appliquer la plaquette (3) de frein du côté du serrage sur le côté de serrage du disque (2) de frein et un côté arrière agencé pour appliquer la plaquette de frein du côté arrière sur le côté arrière du disque (2) de frein,
dans lequel la plaquette (3) de frein du côté du serrage est placée en enclenchement à adaptation de forme avec la fente (15) de plaquette du côté du serrage par rapport à une direction radiale perpendiculaire à un axe de rotation du disque (2) de frein,
comprend au moins un ressort (7) de retenue de plaquette configuré pour être supporté sur la au moins une corne (5a, 5'a) de support de frein du côté du serrage et pour appliquer une force de traction vers l'extérieur radialement à la plaquette (3) de frein du côté du serrage, dans lequel
l'enclenchement à adaptation de forme de la plaquette (3) de frein du côté du serrage avec la fente (15) de plaquette du côté du serrage comprend un enclenchement à adaptation de forme d'une plaque (3a) arrière de plaquette de la plaquette (3) de frein du côté du serrage avec un contour de la au moins une corne (5a, 5'a) de support de frein du côté du serrage, dans lequel le contour de la au moins une corne (5a, 5'a) de support de frein du côté du serrage comprend une surface en contredépouille configurée pour coopérer avec une surface en contredépouille d'une saillie (3c, 3'c) opposée de la plaque (3a) arrière de plaquette sans jeu lorsque la plaquette (3) de frein du côté du serrage est soumise à une force de traction vers l'extérieur radialement appliquée par le au moins un ressort (7) de retenue de plaquette,
dans lequel le au moins un ressort (7) de retenue de plaquette est monté sur la plaque (3a) arrière de plaquette, dans lequel
le au moins un ressort (7) de retenue de plaquette est disposé sur un côté de sommet de la plaque (3a) arrière de plaquette,
**caractérisé en ce que**
le au moins un ressort (7) de retenue de plaquette comprend une partie (7a) centrale et des bras (7b, 7'b) continus, chacun ayant une partie (7c, 7'c) de pression,
dans lequel la partie (7a) centrale comprend une partie (7h) de retenue, qui court en ligne droite et est reliée à chaque extrémité au bras (7b, 7'b) respectif par une partie (7i, 7'i) de liaison d'une façon telle que la partie (7h) de retenue est courbée vers le fond par rapport à la plaque (3a) arrière de plaquette,
dans lequel dans sa partie (7h) de retenue et les deux parties (7i, 7'i) de liaison, la partie (7a) centrale coopère avec une partie (3f) de fixation de la plaque (3a) arrière de plaquette,
dans lequel la partie (3f) de fixation fait saillie du côté (3d) de sommet de la plaque (3a) arrière de plaquette et a une patte (30) montée sur le bord supérieur de la partie (3f) de fixation, laquelle patte (30) s'étend à partir du côté (3d) de sommet en faisant saillie dans la direction longitudinale de la partie (3f) de fixation et fait saillie dans la direction de l'axe (2a) de rotation du disque de frein vers le côté (3j) d'actionnement,
dans lequel la partie (7a) centrale du ressort (7) de retenue de plaquette est en contact avec une surface (30a) de retenue de la patte (30) à un bord latéral de la partie (7h) de retenue et des bords latéraux des parties (7i, 7'i) de liaison, dans lequel les bords latéraux et les bords de sommet des parties (7i, 7'i) de liaison inclinés sont en contact avec le côté inférieur et/ou des extrémités du côté inférieur de la patte (30).

2. Frein (1) à disque d'un véhicule, comprenant :
un disque (2) de frein ;
au moins deux plaquettes (3) de frein, les au moins deux plaquettes (3) de frein comprenant une plaquette (3) de frein du côté du serrage placée du côté du serrage du disque (2) de frein et une plaquette de frein du côté arrière placée du côté arrière du disque (2) de frein ;
un support (5) de frein configuré pour loger les au moins deux plaquettes (3) de frein dans des fentes (15, 16) respectives de plaquette de frein du côté du serrage et du côté arrière, le support (5) de frein ayant au moins une corne (5a, 5'a, 5b, 5'b) de frein d'un côté latéral d'au moins la fente (15) de plaquette de frein du côté du serrage ;
un étrier (6) de frein configuré pour chevaucher le disque (2) de frein lorsqu'il est dans une position montée sur le montage de frein avec un côté de serrage et agencé pour appliquer la plaquette (3) de frein du côté du serrage au côté de serrage du disque (2) de frein et un côté arrière agencé pour appliquer la plaquette de frein du côté arrière au côté arrière du disque (2) de frein,
dans lequel la plaquette (3) de frein du côté du serrage
est placée en enclenchement à adaptation de forme avec la fente (15) de plaquette du côté du serrage par rapport à une direction radiale perpendiculaire à un axe de rotation du disque (2) de frein,
comprend au moins un ressort (7) de retenue de plaquette configuré pour être supporté sur la au moins une corne (5a, 5'a) de support de frein du côté du serrage et pour appliquer une force de traction vers l'extérieur radialement à la plaquette (3) de frein du côté du serrage, dans lequel
l'enclenchement à adaptation de forme de la plaquette (3) de frein du côté du serrage avec la fente (15) de plaquette du côté du serrage comprend un enclenchement à adaptation de forme d'une plaque (3a) arrière de plaquette de la plaquette (3) de frein du côté du serrage avec un contour de la au moins une corne (5a, 5'a) de support de frein du côté du serrage, dans lequel
le contour de la au moins une corne (5a, 5'a) de support de frein du côté du serrage comprend une surface en contredépouille configurée pour coopérer avec une surface en contredépouille d'une saillie (3c, 3'c) opposée de la plaque (3a) arrière de plaquette sans jeu lorsque la plaquette (3) de frein du côté du serrage est soumise à une force de traction vers l'extérieur radialement appliquée par le au moins un ressort (7) de retenue de plaquette,
dans lequel le au moins un ressort (7) de retenue de plaquette est monté sur la plaque (3a) arrière de plaquette, dans lequel
le au moins un ressort (7) de retenue de plaquette est disposé sur un côté de sommet de la plaque (3a) arrière de plaquette,
**caractérisé en ce que**
le ressort (7) de retenue de plaquette a une partie (7a) centrale et des bras (7b, 7'b) continus ayant chacun une partie (7c, 7'c) de pression,
dans lequel la partie (7a) centrale comprend une partie (7k) de retenue et deux parties (71, 7'l) de liaison,
dans lequel la partie (7k) de retenue a une section transversale circulaire avec un axe (34) central, qui court parallèlement à l'axe de rotation (2a) du frein à disque et est conçue à la manière d'un serrage de tuyau ayant deux parties (71) de liaison,
dans lequel les parties (71, 7'l) de liaison sont à une extrémité reliées chacune à une extrémité libre respective de la partie (7k) de retenue circulaire et s'étendent en ligne droite et parallèlement l'une à l'autre radialement vers le haut et des extrémités ouvertes libres des parties (71) de liaison sont reliées chacune à un bras (7b, 7'b) du ressort (7) de retenue de plaquette,
dans lequel la forme de la partie (7k) de retenue correspond à la forme d'une ouverture (31) de retenue d'une partie (3f) de fixation faisant saillie en s'éloignant du côté (3d) de sommet de la plaque (3a) arrière de plaquette,
dans lequel l'ouverture (31) de retenue de la partie (3f) de fixation a une fente (31a), dans lequel l'ouverture (31) de retenue est une ouverture traversante ayant un axe (34) central s'étendant parallèlement à l'axe de rotation (2a) du disque de frein, et
dans lequel le ressort (7) de retenue de plaquette est monté sur la plaquette (3) de frein d'une façon telle que la partie (7k) de retenue du ressort (7) de retenue de plaquette est logée dans l'ouverture (31) de retenue de la plaque (3a) arrière de plaquette, dans lequel les parties (71, 7'l) de liaison sont disposées, côte à côte, à côté l'une de l'autre dans la fente (31a).

3. Frein (1) à disque d'un véhicule, comprenant :
un disque (2) de frein ;
au moins deux plaquettes (3) de frein, les au moins deux plaquettes (3) de frein comprenant une plaquette (3) de frein du côté du serrage placée du côté du serrage du disque (2) de frein et une plaquette de frein du côté arrière placée du côté arrière du disque (2) de frein ;
un support (5) de frein configuré pour loger les au moins deux plaquettes (3) de frein dans des fentes (15, 16) respectives de plaquette de frein du côté du serrage et du côté arrière, le support (5) de frein ayant au moins une corne (5a, 5'a, 5b, 5'b) de frein d'un côté latéral d'au moins la fente (15) de plaquette de frein du côté du serrage ;
un étrier (6) de frein configuré pour chevaucher le disque (2) de frein lorsqu'il est dans une position montée sur le montage de frein avec un côté de serrage et agencé pour appliquer la plaquette (3) de frein du côté du serrage au côté de serrage du disque (2) de frein et un côté arrière agencé pour appliquer la plaquette de frein du côté arrière au côté arrière du disque (2) de frein,
dans lequel la plaquette (3) de frein du côté du serrage est placée en enclenchement à adaptation de forme avec la fente (15) de plaquette du côté du serrage par rapport à une direction radiale perpendiculaire à un axe de rotation du disque (2) de frein,
comprend deux ressorts (70) de retenue de plaquette configurés pour être supportés sur la au moins une corne (5a, 5'a) de support de frein du côté du serrage et pour appliquer une force de traction vers l'extérieur radialement à la plaquette (3) de frein du côté du serrage, dans lequel
l'enclenchement à adaptation de forme de la plaquette (3) de frein du côté du serrage avec la fente (15) de plaquette du côté du serrage comprend un enclenchement à adaptation de forme d'une plaque (3a) arrière de plaquette de la plaquette (3) de frein du côté du serrage avec un contour de la au moins une corne (5a, 5'a) de support de frein du côté du serrage, dans lequel
le contour de la au moins une corne (5a, 5'a) de support de frein du côté du serrage comprend une surface en contredépouille configurée pour coopérer avec une surface en contredépouille d'une saillie (3c, 3'c) opposée de la plaque (3a) arrière de plaquette sans jeu lorsque la plaquette (3) de frein du côté du serrage est soumise à une force de traction vers l'extérieur radialement appliquée par le au moins un ressort (70) de retenue de plaquette,
dans lequel les ressorts (70) de retenue de plaquette sont montés sur la plaque (3a) arrière de plaquette, dans lequel
les ressorts (70) de retenue de plaquette sont placés sur un côté de sommet de la plaque (3a) arrière de plaquette par une retenue (17, 17') respective de ressort, **caractérisé en ce que**
les retenues de ressort pour les ressorts (70, 70') de retenue de plaquette sont sous la forme de saillies (17a, 17'a) en forme de plaque faisant saillie vers le haut à partir du côté (3d) de sommet de la plaque (3a) arrière de plaquette,
dans lequel chaque saillie (17a, 17'a) est agencée en ayant un décalage dans une ligne longitudinale à partir du centre de la plaque (3a) arrière de plaquette à distance de chaque extrémité de la plaque (3a) arrière de plaquette en faisant face à la corne (5a, 5'a) respective de support de frein, le côté de chaque saillie (17a, 17b) faisant face à la corne (5, 5a) respective de support de frein ayant une surface (17b, 17'b) de contact ayant une courbure conçue sous la forme d'une rainure creuse,
dans lequel chaque ressort (70, 70') de retenue de plaquette comprend une plaque (73, 73') de base, deux sangles (73b, 73'b) de fixation et un bras (74, 74') de ressort ayant chacun une partie (74c, 74'c) de pression,
dans lequel un élément (76, 76') de retenue est monté au centre de chaque saillie (17a, 17'a), par lequel le ressort (70, 70') de retenue respectif de retenue de plaquette est monté sur la saillie (17a, 17'a) respective d'une manière fixée et à adaptation de forme au moyen des sangles (73b, 73'b) de fixation,
dans lequel la plaque (73) de base est conçue sous la forme d'un rectangle oblong ayant une longueur correspondant approximativement à la largeur de la saillie (17) dans la direction de l'axe de rotation (2a) du disque de frein,
dans lequel les sangles (73b) de fixation sont montées sur les petits côtés de la plaque (73) de base au moyen d'une partie (73a) incurvée de liaison s'étendant à peu près à angle droit avec la plaque de base et courent parallèlement l'une à l'autre,
dans lequel chaque sangle (73b) de fixation a une ouverture (73c), dans laquelle l'élément (76) de retenue passe,
dans lequel les bras (74) respectifs du ressort sont montés sur le côté longitudinal de la plaque (73) de base respective par une partie (74a) respective de liaison ayant une courbure respective convexe en direction de la surface (17b, 17'b) respective de contact de la saillie (17a, 17b) respective, de manière à ce que sa courbure respective communique avec la courbure respective de la surface (17b, 17'b) respective de contact de la saillie (17a) respective et en se développant entre le bras (74) respectif de ressort avec un effet d'élargissement, dans lequel la partie (74c) de pression du bras (74) respective du ressort est montée à pune extrémité extérieure du bras (74a) de ressort, le côté de fond de la partie (74c) de pression ayant une partie (9) de contact, qui repose sur la partie (8) de support de la corne (5a) respective de support de frein dans l'état monté de la plaquette (3) de frein.
